(19) Europäisches Patentamt
European Patent Office
Office européen des brevets

(11) **EP 3 737 605 B1**

(12) **EUROPÄISCHE PATENTSCHRIFT**

(45) Veröffentlichungstag und Bekanntmachung des Hinweises auf die Patenterteilung:
**28.02.2024 Patentblatt 2024/09**

(21) Anmeldenummer: **18829400.3**

(22) Anmeldetag: **21.12.2018**

(51) Internationale Patentklassifikation (IPC):
**B62K 3/00** *(2006.01)*   **B62K 13/00** *(2006.01)*
**B62K 15/00** *(2006.01)*   **A63B 55/60** *(2015.01)*
**B62B 3/02** *(2006.01)*   **B62B 3/10** *(2006.01)*
**B62B 5/00** *(2006.01)*   **B62B 5/06** *(2006.01)*
**B62B 5/08** *(2006.01)*   **B62B 7/06** *(2006.01)*
**B62B 7/08** *(2006.01)*

(52) Gemeinsame Patentklassifikation (CPC):
**B62K 15/008; B62B 3/02; B62B 3/102;
B62B 5/0043; B62B 5/064; B62B 5/065;
B62B 5/067; B62B 5/087; B62B 7/062;
B62B 7/086; B62K 3/002; B62K 13/00;**
A01D 34/64; A01D 34/67; A01D 34/86;   (Forts.)

(86) Internationale Anmeldenummer:
**PCT/EP2018/086651**

(87) Internationale Veröffentlichungsnummer:
**WO 2019/137805 (18.07.2019 Gazette 2019/29)**

(54) **FAHRZEUG MEHRSPURIG UND NEIGBAR, MIT SCHIEBE- UND MITFAHR-EIGENSCHAFTEN**

PUSHABLE AND RIDABLE INCLINABLE, MULTITRACK VEHICLE

VÉHICULE À PLUSIEURS VOIES ET INCLINABLE, DOTÉ DE CARACTÉRISTIQUES DE POUSSÉE ET DE CONDUITE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.01.2018   DE 102018000114**

(43) Veröffentlichungstag der Anmeldung:
**18.11.2020   Patentblatt 2020/47**

(73) Patentinhaber:
• **Ten Haaft, Michael**
  **75237 Neulingen (DE)**
• **Ten Haaft, Andreas**
  **75326 Kämpfelbach (DE)**

(72) Erfinder:
• **Ten Haaft, Michael**
  **75237 Neulingen (DE)**
• **Ten Haaft, Andreas**
  **75326 Kämpfelbach (DE)**

(74) Vertreter: **Schön, Thilo**
  **Patentanwaltskanzlei Thilo Schön**
  **Grünstraße 1**
  **75172 Pforzheim (DE)**

(56) Entgegenhaltungen:
EP-A1- 3 246 235     WO-A1-2012/069656
WO-A1-2017/164928    CN-A- 106 428 344
CN-U- 203 713 946    GB-A- 2 542 258
US-A- 4 050 713      US-A- 4 087 106
US-A1- 2004 262 871  US-B1- 9 302 728

(52) Gemeinsame Patentklassifikation (CPC): (Forts.)
B62B 2202/404; B62B 2202/42; B62B 2203/44;
B62B 2206/006; B62B 2301/10

**Beschreibung**

Die Erfindung betrifft ein Fahrzeug zum Mitfahren und Schieben, das zusätzlich etwas transportieren kann.

Dabei kann das Fahrzeug beispielsweise als Golftaschenwagen, wobei es eine Tasche mit Golfschlägern transportiert, aber darüber hinaus auch als Freizeitfahrzeug und/oder Einkaufsfahrzeug und/oder Transportfahrzeug und/oder Industriefahrzeug und/oder Baustellenfahrzeug und/oder Seniorenfahrzeug und/oder Behindertenfahrzeug und/oder Kinderwagen und/oder Explorationsfahrzeug und/oder Gartengerät/Mähfahrzeug und/oder Landwirtschaftsfahrzeug und/oder Militärfahrzeug verwendet werden.

Die Idee eines Fahrzeugs nach den beschriebenen Ansprüchen entstand ursprünglich auf einem Golfplatz.

Der Bedarf auf dem Golfplatz besteht in einem Fahrzeug, welches motorisch betrieben flexibel eingesetzt werden kann.

Golfspieler streben seit jeher danach, ihr Golfgepäck möglichst komfortabel, also mit geringster Anstrengung über den Golfplatz zu befördern. Es ist auch erwiesen, dass motorisch betriebene Beförderungsmittel das Spielergebnis bei etwa 10 km Wegstrecke auf einem durchschnittlichen Golfplatz verbessern. Darüber hinaus fördern die aufwendig gestalteten Golfplätze mit Berg- und Tal-Architektur, das steigende Alter der Golfspieler mit zunehmenden gesundheitlichen Einschränkungen sowie auch ein Zeitmangel der noch berufstätigen Golfspieler den Wunsch, ein eigenes Fahrzeug zu besitzen, das flexibel nach Bedarf dahintergehend oder nebenhergehend geschoben bzw. gelenkt und zum Mitfahren verwendet werden kann.

Bei den kommerziellen Golfclubs besteht das Interesse, möglichst viele zahlende Golfspieler pro Tag spielen zu lassen, also eine 18-Loch Golfrunde in möglichst kurzer Zeit zu spielen.

Die Verwendung von einem bei den Golf-Clubs angemieteten Cart = Vierrädriges Fahrzeug zur Beförderung von bis zu zwei Personen und Golftaschen, ist nachteilig, denn das Eigengewicht von ca. 400 Kg führt zu einer erhöhten Rasenbelastung auf den Spielbahnen. Bei der Benutzung von zwei Personen wird mit dem Cart in der Regel außerdem jeweils zu der Ballposition jedes Spielers gefahren. Sind die jeweiligen Ballpositionen in einer größeren seitlichen Distanz voneinander entfernt, so führt das über die Rasenbelastung hinaus auch zusätzlich zu einem weiteren Zeitaufwand.

In einem Abstand von etwa 20 - 50 Meter rund um das sogenannte "Grün", auf dem der Spieler seinen Ball einlochen muss, also dem finalen Spielbereich jeder Spielbahn, ist der Rasen kürzer gemäht und somit empfindlicher für stärkere Belastungen. Es besteht daher ein Fahrverbot für Fahrzeuge in diesem Spielbereich und Golftaschenwagen dürfen ausschließlich geschoben werden. Der/die Spieler müssen dann das Cart auf den seitlichen Weg fahren und von dort mit einem weiteren Zeitaufwand zu Fuß wieder zu ihrem Ball in Richtung des "Grüns" zurück laufen.

Auf manchen Golfplätzen ist das Befahren der Spielbahnen mit Carts allerdings gar nicht erlaubt, sodass ein Cart generell während der gesamten Golfrunde auf dem seitlichen Fahrweg gefahren werden muss. Dabei läuft der/die Spieler/in für die meisten Schläge von dem seitlichen Fahrweg zu seiner Ballposition und zurück zum Cart, fährt in die Nähe der nächsten Ballposition usw.. Es kommt auch vor, dass der Spieler nicht den richtigen Schläger aus seiner Golftasche mitgenommen hat, weil er die Lage der Ballposition nicht richtig erkennen konnte und nochmals zurück zum Cart laufen muss. Der zusätzliche Zeitaufwand gegenüber einem Spieler, der sich überwiegend auf den Spielbahnen aufhält, ist bei solchen Plätzen enorm.

Ist eine Spielergruppe, welche aus bis zu vier Personen besteht, besonders langsam, so kann diese Zeitverzögerung, welche sich auf die nachfolgenden Spielergruppen auswirkt, an stark frequentierten Tagen bis in den Abend hinein für viele Spieler zu Zeitverschiebungen der Startzeiten sowie Wartezeiten auf den Spielbahnen führen.

Schlechtes Wetter kann ebenso dazu beitragen, dass die Spielbahnen auf Golfplätzen nicht befahren werden dürfen. Besonders nach sehr starkem oder tagelang anhaltenden Regen ist oftmals zum Schutz des Rasens das Befahren der Spielbahnen mit Fahrzeugen verboten. Dann sind auch jene Besitzer von Golftaschenwagen, welche ausschließlichen das Mitfahren ermöglichen, eingeschränkt. Diese müssen für solche Situationen also über einen zweiten Golftaschenwagen zum Schieben verfügen oder ihn gegen Gebühr anmieten.

Das erfindungsgemäße Fahrzeug kann durch mindestens einen/eine Benutzer/in dahintergehend oder nebenhergehend geschoben bzw. gelenkt sowie darauf stehend und/oder sitzend individuell und zeitsparend direkt zu der eigenen Ballposition gefahren werden. Dabei kann das Fahrzeug seitlich geneigt werden, wodurch auf den Spielbahnen ein sportliches Fahren mit sogenanntem Carven und ein Neigungsausgleich von Steigung und Gefälle in mindestens seitlichen Hanglagen sowie in Schräglagen z. B. an versetzten Ebenen ermöglicht wird. Kurz vor dem Grün wechselt man von dem Fahrbetrieb in den Schiebebetrieb, sodass das Fahrzeug wie ein Schiebe-Trolley bis zum Abschluss der Spielbahn weiter benutzt werden kann.

Um anschließend möglichst schnell zum nächsten sogenannten Abschlag, dem Start jeder Spielbahn zu kommen, wechselt man wieder in den Fahrbetrieb.

Es ist dabei nicht selten, dass zwischen einem Grün und dem Abschlag der nächsten Spielbahn eine Distanz von mehreren hundert Metern besteht. Der Fahrbetrieb ist ein erheblicher zeitlicher Vorteil für den Spielablauf, den Zeitaufwand des Golfspielers und damit auch für den Golfclub.

Nach Spielende wird das Fahrzeug dann im Pack-Modus kompakt in einem Schrank des Golfclubs verstaut oder in ein Auto eingeladen. Vorteilhaft kann dabei das anzuhebende Gewicht erheblich reduziert werden, indem Fahrzeug-Elemente wie Antriebsrad, Akku usw. vorher demontiert werden.

Die vorgenannten flexiblen Eigenschaften in einem Fahrzeug vereint, sind ebenfalls für weitere Einsatzbereiche bzw. Verwendungszwecke sehr interessant: Als Freizeitfahrzeug bringt es im Fahrbetrieb viel Spaß. Es kann auch für sportliches Fahren verwendet werden und ist bei örtlichen Einschränkungen bequem dahintergehend oder nebenhergehend zu schieben bzw. zu lenken.

Zum Einkaufen kann das Fahrzeug zwischen Supermarkt-Regalen dahintergehend oder nebenhergehend geschoben bzw. gelenkt und anschließend damit nach Hause gefahren werden.

Als Transport- / Industrie- und Baustellenfahrzeug dient es mit eventueller Zusatzausstattung zur Beförderung von Personen und Material, wird z. B. auf längeren Strecken gefahren und in eingeschränkten Bereichen dahintergehend oder nebenhergehend geschoben bzw. gelenkt.

Zur Erkundung und im Gelände kann es mit der entsprechenden Ausstattung als Explorationsfahrzeug, Militärfahrzeug sowie Landwirtschaftsfahrzeug eingesetzt werden.

Mit einem zusätzlichen Aufbau wie z. B. einem Mähmotor kann es auch an schrägen Flächen / Hängen als Gartengerät und Mähfahrzeug benutzt werden.

Und als Senioren- und Behindertenfahrzeug, sowie mit der Aufnahme von Kinderwagenkörben als Kinderwagen mit Mitfahreigenschaften, transportiert es Menschen, wobei das Fahrzeug auch zwei oder mehr Personen stehend und/oder sitzend befördern kann, in dem zum Beispiel zwei Personen auf jeweils mindestens einem Trittbrett / Sitz stehen und/oder sitzen, oder auch eine Person sitzt, während die zweite Person das Fahrzeug darauf stehend lenkt oder nach Bedarf das Fahrzeug mit einer sitzenden Person von einer anderen Person dahintergehend oder nebenhergehend geschoben bzw. gelenkt wird. Nach der Benutzung kann das Fahrzeug dann im Pack-Modus platzsparend z. B. im Treppenhaus oder im Flur einer Wohnung verstaut bzw. mit einem geringen Packmaß z. B. im Kofferraum eines Pkw transportiert werden.

## Stand der Technik

Aus dem Stand der Technik sind insbesondere neben den klassischen manuellen Golftaschenwagen wie Zweirad Zieh-Trolleys und Dreirad sowie Vierrad Schiebe-Trolleys seit vielen Jahren auch zahlreiche elektrisch angetriebene Golftaschenwagen bekannt.

Diese wurden bisher ausschließlich mit einem angetriebenen Schiebe-Modus ausgestattet und erleichtern dem Golfspieler das manuelle Schieben der Golfausrüstung durch größtenteils elektrische Antriebe.

Es sind seit einigen Jahren auch Sonderformen von Golftaschenwagen bekannt, welche aber ausschließlich für das Draufstehen / Mitfahren konstruiert wurden.

Die EP 1 917 174 B1 beschreibt einen batteriegetriebenen Golftaschenwagen, der beide Betriebsarten, also das Schieben sowie das Draufstehen / Mitfahren vereint. Diese zeigt einen Golftaschenwagen, bei dem ein Trittbrett zum Draufstehen / Mitfahren verwendet wird, welches über eine starre Verbindung zwischen dem linken und rechten Radarm zu einer Einheit verfügt. Dieser Golftaschenwagen weist eine Stehfläche auf, die sich bei Fahrt seitlich an einem Hang mit dem gesamten Fahrzeug parallel zur Hangebene neigt, wodurch ein Kippmoment entsteht. Bei Kurvenfahrt bleibt das Fahrzeug mit seiner Stehfläche steif in einer Lage parallel zur Bodenfläche, wodurch beim Benutzer aufgrund der bei Kurvenfahrt wirkenden Fliehkräfte zumindest ein unangenehmes Gefühl entsteht. Zudem besteht das Risiko, dass das Fahrzeug bei schneller Fahrt in engen Kurven umkippen kann.

Die WO2012/069656A1 wird als der nächstliegende Stand der Technik angesehen und beschreibt einen batteriegetriebenen Golftaschenwagen, der beide Betriebsarten, also das Draufstehen/ Mitfahren vereint.

Die Aufgabe der vorliegenden Erfindung ist es, ein Fahrzeug bereitzustellen, welches die Nutzung auf einem Golfplatz flexibler und der jeweiligen Situation angepasst erlaubt und ein verbessertes Fahrgefühl bewirkt.

Gelöst wird diese Aufgabe durch ein Fahrzeug mit den Merkmalen nach Patentanspruch 1.

## Kurzdarstellung

Das Fahrzeug nach der Erfindung ist so ausgebildet, dass es in mindestens zwei vorwählbaren Betriebsmodi verwendet werden kann, nämlich einem ersten Betriebsmodus zum Mitfahren, in dem mindestens ein/e Benutzer/in auf mindestens einer Fläche stehen und/oder sitzen kann und welcher im Folgenden auch als Mitfahr-Modus bezeichnet wird, sowie einem zweiten Betriebsmodus zum Schieben, in dem mindestens ein/e Benutzer/in hinter oder neben dem Fahrzeug geht und es entweder lenkt, während es angetrieben selbst fährt, oder schiebt, während es sich im Freilauf befindet, im Folgenden auch als Schiebe-Modus bezeichnet.

Durch die Art der Aufhängung der einzelnen Fahrzeugkomponenten bedingt, kann das Fahrzeug im Mitfahr-Modus durch den/die mindestens einen/eine Benutzer/in oder eine Automatik seitlich geneigt werden, wodurch mindestens in seitlichen Hanglagen und in Schräglagen z.B. an versetzten Ebenen ein Neigungsausgleich der Schräglage, das Fahren mit sogenanntem Carven, sowie für den/die mindestens einen/eine Benutzer/in eine vorteilhafte Stand- und/oder Sitzposition mit einer bevorzugten Körperhaltung ermöglicht wird und sich im Schiebe-Modus mindestens zwei Fahrzeugkomponenten und/oder jeweils Teile / Unterkomponenten davon voreingestellt in einer gegenüber mindestens dem Mitfahr-Modus anderen Position zueinander befinden.

Wobei es auch möglich sein kann, konstruktionsbedingt diese Art der Aufhängung der Fahrzeugkomponenten ebenso im Schiebe-Modus zu nutzen, sodass mindestens ein/e Benutzer/in oder eine Automatik die Neigung in mindestens seitlichen Hanglagen sowie in Schräglagen z. B. an versetzten Ebenen ausgleichen kann und dabei hinter oder neben dem Fahrzeug und es entweder lenkt, während es angetrieben selbst fährt, oder schiebt, während es sich im Freilauf befindet.

Die bevorzugte Körperhaltung des/der mindestens einen Benutzers/Benutzerin kann je nach Fahrbahn bzw. Gelände sowie der Neigung in Hanglagen oder Schräglagen z.B. an versetzten Ebenen und in Kurvenlagen sehr unterschiedlich sein. Während der Mensch über seine Gleichgewichtsorgane überwiegend bestrebt ist, eine ausbalancierte Körperhaltung einzunehmen, in der das Gleichgewicht hergestellt ist, kann beispielsweise beim Fahren in Kurven je nach Geschwindigkeit eine ganz andere Körperhaltung für den/die mindestens einen Benutzer/in wesentlich angenehmer sein und daher bevorzugt werden.

Die flexiblen Anpassungsmöglichkeiten des Fahrzeugs begünstigen in jedem Fall für den/die mindestens einen Benutzer/in die Einnahme der bevorzugten Körperhaltung und sind förderlich für ein verbessertes Fahrgefühl und eine vorteilhafte Stand- und/oder Sitzposition.

Die flexible Anpassung wird ermöglicht dadurch, dass am Fahrzeug mindestens eine zweite und eine dritte Fahrzeugkomponente bestehen, die sich je seitlich links und rechts der Fahrzeuglängsachse befinden, über jeweils mindestens ein Rad verfügen und voneinander abhängig und/oder unabhängig dreh- und/oder schwenkbar an mindestens einer ersten Fahrzeugkomponente gelagert sind. Dadurch wird beim Fahren auch ein Carven ermöglicht, welches für einen sogenannten Carving-Effekt sorgt.

Beim Durchfahren einer Kurve mit einem Fahrzeug wird auf das Fahrzeug und den/die Fahrer/in eine Kraft (Fliehkraft) ausgeübt, die durch ein Neigen auf die Kurveninnenseite ausgeglichen werden muss, damit man nicht nach außen getragen wird und umkippt. Die bisher bekannten Fahrzeuge, die sowohl zum Mitfahren als auch zum Schieben konzipiert sind, haben keine Einrichtungen, um durch Verändern der Achsstellung das Nachinnenneigen zu ermöglichen. Bei dem erfindungsgemäßen Fahrzeug kann der/die mindestens eine Benutzer/in oder eine Automatik durch ein Nachinnenneigen des Fahrzeugs den Schwerpunkt näher an den Mittelpunkt der Kurvenbewegung bringen und damit die Zentrifugalkraft nach der Formel

$$m \cdot r \cdot w^2$$

reduziert werden.

m = Masse des sich der Zentrifugalkraft aussetzenden Körpers

r = Entfernung des Körpers bis zum Mittelpunkt der Kreisbewegung

$w^2$ = Winkelgeschwindigkeit im Quadrat

Der Carving-Effekt erlaubt ein schnelleres Durchfahren von Kurven und ermöglicht dem/der mindestens einen Benutzer/in, eine vorteilhafte Stand- und/oder Sitzposition beim Fahren seitlich zum Hang sowie in Schräglagen z. B. an versetzten Ebenen, mit einer höheren Kippsicherheit als bei Fahrzeugen nach dem Stand der Technik.

Bei Fahrt seitlich zum Hang sowie an versetzten Ebenen kann durch den/die mindestens einen /eine Benutzer/in oder eine Automatik die Position der seitlichen mindestens zweiten und/oder dritten Fahrzeugkomponente zueinander dergestalt verändert werden, dass Teile / Unterkomponenten des Fahrzeugs um die Fahrzeuglängsachse gedreht werden und durch Einnehmen dieses Wankwinkels kann die Neigung des Hangs bzw. der Schräglage z. B. an der versetzten Ebene kompensiert werden. Dadurch verändert sich auch mindestens die Fahrzeuglage oder Fahrzeuglänge oder Fahrzeugbreite oder Fahrzeughöhe oder Sitzhöhe.

Das Fahrzeug kann auch weitere Fahrzeugkomponenten mit oder ohne Räder aufweisen.

Das Fahrzeug kann beispielsweise verwendet werden als Golftaschenwagen, wobei es eine Tasche mit Golfschlägern transportiert und/oder Freizeitfahrzeug und/oder Einkaufsfahrzeug und/oder Transportfahrzeug und/oder Industriefahrzeug und/oder Baustellenfahrzeug und/oder Seniorenfahrzeug und/oder Behindertenfahrzeug und/oder Kinderwagen und/oder Explorationsfahrzeug und/oder Gartengerät/Mähfahrzeug und/oder Landwirtschaftsfahrzeug und/oder Militärfahrzeug.

Das Fahrzeug verfügt über einen ersten vorwählbaren Betriebsmodus, in dem mindestens ein/e Benutzer/in auf mindestens einer Fläche stehen und/oder sitzen kann und mindestens ein Rad am Fahrzeug zumindest zeitweise angetrieben ist, wobei es auch möglich sein kann, zeitweise in einen Freilauf zu schalten, bzw. das Rad beim Bremsen natürlich nicht angetrieben ist. Im mindestens ersten Betriebsmodus kann durch den/die mindestens einen/eine Benutzer/in oder eine Automatik mindestens die zweite und/oder die dritte Fahrzeugkomponente und/oder Teile / Unterkomponenten davon direkt oder indirekt zumindest teilweise vertikal um mindestens eine Drehachse an der ersten Fahrzeugkomponente bewegt werden. Dadurch wird das Fahren mit dem oben beschriebenen Carving-Effekt möglich und die Neigung mindestens in seitlichen Hanglagen sowie in Schräglagen z. B an versetzten Ebenen kann ausgeglichen werden.

Weiter verfügt das Fahrzeug über einen zweiten vorwählbaren Betriebsmodus, in dem mindestens ein/e Benutzer/in hinter oder neben dem Fahrzeug geht und es entweder lenkt, während es angetrieben selbst fährt, oder schiebt, während es sich im Freilauf befindet und sich mindestens zwei Fahrzeugkomponenten und/oder Teile / Unterkomponenten davon voreingestellt in einer gegenüber dem ersten Betriebsmodus anderen Position zueinander befinden. Dadurch wird die Benutzung bzw. das Mitführen auch beispielsweise an dem Grün eines Golfplatzes, wo keine großen Fahrzeuge wie z. B. Carts zugelassen sind bzw. nicht mit Fahrzeugen gefahren werden darf, oder als Einkaufswagen in einem Supermarkt, oder als sonstiges Fahrzeug bei örtlichen Fahr-Einschränkungen ermöglicht.

Erfindungsgemäß sind die Ausführungsformen des zweiten vorwählbaren Betriebsmodus vielfältig und auch individuell von dem Fahrzeugtyp sowie dem Einsatzzweck des Fahrzeugs abhängig.

In einer einfachen Ausführungsform beispielsweise kann eine in der Länge und/oder der Position veränderbare Lenkstange vorwählbar in eine zum Schieben des Fahrzeugs geeignete und dafür vorgesehene Position gebracht werden.

Praxisorientierter sind allerdings Ausführungsformen, bei denen sich vorwählbar im Schiebe-modus die Länge und/oder die Breite und/oder die Höhe des Fahrzeugs und/oder die Sitzhöhe ändert. Konstruktionsbedingt lassen sich dadurch beispielsweise Fahrzeugabmessungen realisieren, welche ein uneingeschränktes Gehen des Benutzers / der Benutzerin hinter oder neben dem Fahrzeug ermöglichen sowie andere Einsatzzweck typische Gegebenheiten bzw. Bedürfnisse mit einbeziehen.

Es bestehen am Fahrzeug mindestens zwei Betriebsmodi, in denen das Fahrzeug jeweils auf mindestens drei Rädern bewegt werden kann, wobei in jedem der mindestens zwei Betriebsmodi mindestens eine Person und/oder Material befördert werden kann und/oder Geräte / Maschinen als Zusatzausstattung benutzt werden können, welche auch während dem Betriebsmodus-Wechsel am Fahrzeug verbleiben kann.

Vorteilhaft ausgestaltet kann mindestens im ersten Betriebsmodus die durch mindestens einen/ eine Benutzer/in oder eine Automatik entstandene/n Bewegung/en mindestens der zweiten und/ oder dritten Fahrzeugkomponente und/oder jeweiliger Teile / Unterkomponenten davon einzeln oder im Hub einseitig oder beidseitig gleich oder ungleich zumindest teilweise vertikal direkt oder indirekt um mindestens eine Drehachse an der ersten Fahrzeugkomponente in eine Richtung oder verschiedene Richtungen erfolgen.

Vorstellbar ist eine gleiche oder ungleiche Bewegung von mindestens zwei Fahrzeugkomponenten oder jeweiliger Teile / Unterkomponenten davon in eine Richtung beispielsweise bei einem Explorationsfahrzeug, welches auch autonom oder ferngesteuert arbeitet, über eine jeweils seitliche vierte und fünfte Fahrzeugkomponente verfügt und sich in einem Tunnel mit Höheneinschränkungen befindet. Wobei mindestens im ersten Betriebsmodus die vier seitlichen Fahrzeugkomponenten im Hub gleich oder ungleich zumindest teilweise vertikal nach oben bewegt und die erste Fahrzeugkomponente gesenkt werden kann. Eine Zusatzausstattung mit entsprechender Mechanik sowie Elektronik und verschiedenen Sensoren kann eine solche Ausführungsform entsprechend unterstützen.

Eine weitere Ausführungsform stellt ein Senioren- oder Behindertenfahrzeug dar, mit einer zweiten bis fünften Fahrzeugkomponente mit jeweils mindestens einem Rad und einer sechsten Fahrzeugkomponente mit mindestens einem Sitz, dabei kann beispielsweise die seitliche zweite bis fünfte Fahrzeugkomponente im mindestens ersten Betriebsmodus jeweils eine im Hub gleiche oder ungleiche vertikale Bewegung in die gleiche Richtung durchführen, wodurch sich die sechste Fahrzeugkomponente mit einer sitzenden Person anhebt oder senkt, wobei diese Art der Aufhängung auch im zweiten Betriebsmodus vorteilhaft sein kann, indem die Sitzhöhe sowie die Griffhöhe zum Schieben des Fahrzeugs individuell den Bedürfnissen angepasst wird.

In einer vorteilhaften Ausgestaltung erfolgt die Aufhängung mindestens der zweiten und dritten Fahrzeugkomponente und/oder jeweiliger Teile / Unterkomponenten davon an mindestens einer Drehachse der ersten Fahrzeugkomponente abhängig und/oder unabhängig voneinander.

Vorteilhaft verfügt das Fahrzeug zusätzlich über einen dritten vorwählbaren und einstellbaren Betriebsmodus, in dem mindestens ein/e Benutzer/in auf mindestens einer Fläche stehen und/ oder sitzen kann, wobei mindestens ein Rad am Fahrzeug zumindest zeitweise angetrieben ist und in dem mindestens die zweite und die dritte Fahrzeugkomponente und/oder Teile / Unterkomponenten davon zur ersten Fahrzeugkomponente arretiert sind. Durch die Arretierung wird eine Bewegung der mindestens zweiten und dritten Fahrzeugkomponente mindestens zur ersten Fahrzeugkomponente in den Gelenken ausgeschlossen.

Den dritten Betriebsmodus kann der/die mindestens eine Benutzer/in anwählen, wenn z. B. eine Bewegung des Fahrzeugs ausschließlich auf ebener Fläche erfolgt. Das Fahrzeug wird dadurch in sich steifer und erlaubt eine Benutzung auch im herkömmlichen Fahrstil, wenn der/die mindestens eine Benutzer/in das wünscht.

In einer weiter bevorzugten Ausgestaltung ändert sich in mindestens dem zweiten Betriebsmodus zum Schieben voreingestellt die Fahrzeuglänge und/oder Fahrzeugbreite und/oder Fahrzeughöhe und/oder Sitzhöhe gegenüber mindestens dem ersten und/oder dritten Betriebsmodus zum Mitfahren.

Weiter vorteilhaft können an der ersten Fahrzeugkomponente mehrere lenkbare Räder an einer oder mehreren Halterungen angeordnet sein, die in mindestens einer Aufnahme schwenkbar und/oder drehbar gelagert sind. Dies können beispielsweise zwei Räder an einer Vorderachse sein, die über ein Drehgelenk an der ersten Fahrzeugkomponente angeordnet sind. Es sind aber auch andere Anordnungen sowie weitere Räder denkbar.

In einer vorteilhaften Ausgestaltung erfolgt die Lenkung des Fahrzeugs durch Drehen und/oder Schwenken mindestens einer Lenksäule oder Lenkstange entweder direkt oder indirekt. Bei indirekter Lenkung würde die Lenkbewegung durch eine/ein/mehrere Mechanik/en und/oder Getriebe und/oder Kette/n und/oder Seilzug/züge, etc. übertragen werden.

Vorteilhaft kann das Fahrzeug mit einer starren und/oder drehbar und/oder schwenkbar gelagerten Lenksäule ausgestattet sein, wobei mindestens ein Rad am Fahrzeug über mindestens einen Motor verfügt, der elektrisch gesteuert durch mindestens einen Benutzer oder eine Automatik das Fahrzeug lenken kann. Dadurch können beispielsweise bei Ausstattung mit einer starren Lenksäule zwei angetriebene Räder mit unterschiedlicher Drehzahl die Lenkbewegung ausführen. Auch andere Ausführungen z. B. mit einem angetriebenen Rad oder auch weiteren angetriebenen Rädern sind möglich.

Die Lenkung kann aber ebenso vorteilhaft über eine/mehrere Mechanik/en und/oder einen/mehrere Antrieb/e indirekt mit Hilfe von Steuerelektronik erfolgen, wobei durch ein Drehen und/oder Schwenken der Lenksäule und/oder mindestens einer Achse und/oder mindestens einem Rad, welches auch über mindestens einen Motor verfügen kann, elektrisch gesteuert die Lenkbewegung ausgeführt wird. Vorstellbar ist dabei auch eine Variante mit einer starren Lenksäule und einer Ausstattung mit sogenanntem Joystick, bei der beispielsweise zwei Räder an einer schwenkbaren Vorderachse oder auch nur ein einzelnes Rad elektrisch gesteuert die Lenkung des Fahrzeugs mindestens durch Drehen des Rades bzw. der Räder ermöglichen. Wobei an der zweirädrigen Vorderachse auch die elektrische Schwenkbewegung möglich ist, z. B. für Schräglagen. Auf Basis dieser Ausstattung sind viele weitere interessante Varianten möglich.

Dabei kann im Falle der Verwendung eines Elektromotors dieser beim Bremsen auch als Generator zum Laden von Akkus funktionieren.

Vorteilhaft ist es, wenn mindestens im ersten Betriebsmodus auch bei Veränderung der Fahrzeuglage und zumindest teilweiser vertikaler Bewegung mindestens der zweiten und/oder dritten Fahrzeugkomponente und/oder jeweiliger Teile / Unterkomponenten davon, mindestens seitlich an einem Hang sowie in Schräglagen z. B. an versetzten Ebenen das Fahren geradeaus möglich ist.

Es ist weiter vorteilhaft, wenn mindestens im ersten Betriebsmodus mindestens ein/e Benutzer/in oder eine Automatik mindestens in Kurven- und seitlichen Hanglagen sowie in Schräglagen z. B. an versetzten Ebenen jeweils einzeln und/oder einseitig die hangaufwärts oder kurveninnenseitig gelegene/n mindestens zweite oder dritte Fahrzeugkomponente/n und/oder Stehfläche/n um mindestens eine Drehachse an der ersten Fahrzeugkomponente bewegen kann, während einzeln und/oder einseitig die hangabwärts oder kurvenaußenseitig gelegene/n mindestens zweite oder dritte Fahrzeugkomponente/n und/oder Stehfläche/n nahezu oder vollständig unverändert in der Position wie auf ebener Fläche bei Geradeausfahrt verbleibt/verbleiben. Dadurch entsteht der Carving-Effekt und es wird ein Neigungsausgleich mindestens in seitlichen Hanglagen sowie in Schräglagen z. B. an versetzten Ebenen ermöglicht.

Es ist auch von Vorteil, wenn mindestens im ersten Betriebsmodus mindestens ein/e Benutzer/in oder eine Automatik mindestens in Kurven- und seitlichen Hanglagen sowie in Schräglagen z. B. an versetzten Ebenen jeweils mindestens einzeln und/oder pro Seite die hangaufwärts oder kurveninnenseitig und hangabwärts oder kurvenaußenseitig gelegene/n mindestens zweite und dritte Fahrzeugkomponente/n und/oder Stehfläche/n zumindest teilweise vertikal um mindestens eine Drehachse an der ersten Fahrzeugkomponente bewegen kann, denn dadurch wird ebenso ein Carven ermöglicht und es kann mindestens in seitlichen Hanglagen sowie in Schräglagen z. B. an versetzten Ebenen die Neigung der Schräglage ausgeglichen werden.

Weiter vorteilhaft kann das Fahrzeug so ausgestaltet werden, dass die Steh- oder Fußabstellfläche/n beweglich an mindestens einer Fahrzeugkomponente angebracht ist/sind, so dass mindestens im ersten Betriebsmodus mindestens ein/e Benutzer/in oder eine Automatik mindestens in seitlichen Hanglagen sowie in Schräglagen z. B. an versetzten Ebenen einen Neigungsausgleich ausführen kann, unabhängig von einer Bewegung der entsprechenden Fahrzeugkomponente. Das heißt, in dieser Ausführung würde der Carving-Effekt durch eine Bewegung der Steh- oder Fußabstellfläche/n relativ zu der/den entsprechenden Fahrzeugkomponente/n erreicht.

Es ist vorteilhaft, dass sich im zweiten Betriebsmodus zum Schieben die erste Fahrzeugkomponente und/oder Teile / Unterkomponenten davon voreingestellt in einer gegenüber mindestens dem ersten Betriebsmodus anderen Position zu mindestens einer anderen Fahrzeugkomponente und/oder Teilen / Unterkomponenten davon befindet befinden.

In vorteilhafter Weise verfügt das Fahrzeug über einen zusätzlichen Modus, welcher im Folgenden als Pack-Modus bezeichnet wird und der es ermöglicht, das Fahrzeug zu dessen Transport in einem anderen Fahrzeug, z. B. im Kofferraum eines Personenkraftwagens, oder zur Unterbringung z. B. in einem Schrank in eine kompaktere Form zu bringen.

Das kann dadurch erreicht werden, dass die zweite und die dritte Fahrzeugkomponente und/oder auch weitere Fahrzeugkomponenten, wie eine vierte Fahrzeugkomponente, etc., jeweils aus mindestens zwei Teilen bestehen, die durch mindestens ein Gelenk verbunden sind, wobei in dem Pack-Modus die mindestens zwei Teile jeweils um das/die entsprechende/n Gelenk/e geschwenkt und/oder gedreht werden. Dadurch erfolgt ein Zusammenklappen des Fahrzeugs auf ein günstigeres Packmaß.

Bei einer darüber hinaus vorteilhaften Ausgestaltung verfügt das Fahrzeug über mindestens eine Aufnahme oder Aufnahmemöglichkeit zur Befestigung von zusätzlich einer/einem oder mehreren Sitzfläche/n und/oder Golftasche/n und/oder Transportbehälter/n und/oder Werkzeug/en und/oder Leiter/n und/oder Vorrichtung/en und/oder Baugerät/en und/oder Mähgerät/e und/oder anderen Gerät/en und/oder Waffeln etc..

Je nach Ausführung kann das Fahrzeug auch beispielsweise mit der Anbringung / Befestigung von Mähgeräten als Mähfahrzeug eingesetzt werden, oder mit der Ausstattung einer Leiter im Bereich Bau / Industrie, was auch in seitlichen Hanglagen sowie in Schräglagen z. B. an versetzten Ebenen in verschiedenen Betriebsmodi von Vorteil ist.

Beispielsweise können für eine Ausführung als Senioren- und Behindertenfahrzeug mit einer/ mehrerer Sitzfläche/n und/oder Steh- oder Fußabstellflächen, oder mit der Aufnahme von Kinderwagenkörben als Kinderwagen mit Mitfahreigenschaften, auch mehrere Menschen in verschiedener Weise transportiert werden. Das Fahrzeug kann dabei im Mitfahr-Modus z. B. zwei oder mehr Personen stehend und/oder sitzend befördern, in dem beispielsweise zwei Personen auf jeweils mindestens einem Trittbrett / Sitz stehen und/oder sitzen, oder eine Person sitzt, während die zweite Person das Fahrzeug darauf stehend lenkt oder nach Bedarf im Schiebe-Modus das Fahrzeug mit einer sitzenden Person von einer anderen Person dahintergehend oder nebenhergehend entweder gelenkt wird, während es angetrieben selbst fährt, oder geschoben wird, während es sich im Freilauf befindet.

In weiter vorteilhafter Weise sind zum Transport oder Verstauen z. B. in einem Schrank zumindest ein Teil der Räder und/oder andere Bauteile abnehmbar und/oder schwenkbar angeordnet. Durch die Abnahme von Bauteilen, wie den Rädern und/oder Akkus und/oder Motoren, etc., lässt sich das Gewicht deutlich verringern, was beim Anheben des Fahrzeugs z. B. zum Verladen in den Kofferraum eines PKW oder zum Transport des Fahrzeugs in einen Keller sinnvoll ist.

In einer zusätzlich vorteilhaften Ausgestaltung ist das Fahrzeug mit einem oder mehreren Motoren ausgestattet, die es antreiben. Dabei kann es sich um einen oder mehrere Elektromotoren oder Verbrennungsmotoren handeln. Weiter kann das Fahrzeug mit einem oder mehreren Akkumulatoren zur Stromversorgung oder einem Tank für Brennstoff, oder Brennstoffzellen ausgerüstet sein. Auch ein Hybridantrieb bestehend aus Elektromotor/en und Verbrennungsmotor/en wäre möglich. Außerdem kann das Fahrzeug eine oder mehrere Steuerungen zur Regelung des/der Motor/en umfassen.

Der/die Motor/en könnten auch zur Rekuperation genutzt und dabei zu Bremszwecken und/oder zum Laden von einem oder mehreren Akkus verwendet werden.

Vorstellbar wäre auch, an dem Fahrzeug Solarzellen zum Laden des/der Akku/s anzubringen.

Eine vorteilhafte Möglichkeit besteht auch darin, das Fahrzeug mit Pedalen auszurüsten, um einen Antrieb mit Muskelkraft durch den/die Benutzer/in mit einer fahrradähnlichen Fortbewegung zu ermöglichen. Dies kann auch in Kombination mit einem oder mehreren Motoren möglich sein.

In ferner vorteilhafter Ausgestaltung ist das Fahrzeug auch im Freilauf benutzbar, ohne den Antrieb einzuschalten. Dies kann von Vorteil sein, wenn unterwegs beispielsweise bei der Ausstattung mit mindestens einem Elektromotor der/die Akku/s keine Leistung mehr haben und der/die Benutzer/in das Fahrzeug manuell ohne motorische Unterstützung schieben muss.

Darüber hinaus wäre es auch möglich, das Fahrzeug mit einer Fernbedienung zu steuern, was eine Steuerung ohne Körperkontakt und/oder Kontakt-Regelung und/oder Hand-Lenkung möglich macht.

Es wäre auch möglich, das Fahrzeug mit mindestens einer Steuerung auszurüsten, die das autonome Fahren ohne das Eingreifen des/der Benutzer/in ermöglicht. Möglich wäre die Kombination mit elektronischen Fahrassistenten, Einparkhilfen, etc.. Dies würde das Fahrzeug sicherer machen und es dem/der Benutzer/in ermöglichen, die Fahrzeit für andere Aktivitäten zu nutzen.

Weiter könnte das Fahrzeug in einer vorteilhafteren Ausgestaltung über eine Automatik verfügen, die den Übergang von dem Pack-Modus in einen Betriebsmodus und/oder umgekehrt und/oder von einem Betriebsmodus in einen anderen Betriebsmodus automatisch und/oder ferngesteuert ermöglicht. Dies könnte beispielsweise durch eine oder mehrere Mechaniken und/oder Antrieb/e mit Hilfe von Steuerelektronik realisiert werden, wodurch es auch einem/ einer etwas schwächeren Senior/in ermöglicht wird, ohne relevanten Kraftaufwand das Fahrzeug in einen anderen Modus zu bringen.

Ebenso kann es sinnvoll sein, diese/n Mechanik/en und Antrieb/e mit Unterstützung von Steuerelektronik sowie zusätzlichen Neigungssensoren automatisch und/oder ferngesteuert zur Neigungsanpassung von Fahrzeugkomponenten und/oder Teilen / Unterkomponenten davon an die Steigung bzw. das Gefälle mindestens bei Bergauf- / Bergabfahrt und/oder in seitlichen Hanglagen sowie in Schräglagen z. B. an versetzten Ebenen und/oder in Kurven zu nutzen, z. B. um automatisch die Anpassung einer aufrechten Fahrzeugposition zu ermöglichen. Auch die Änderung der Sitzhöhe, Fahrzeughöhe, Fahrzeuglänge und Fahrzeugbreite wäre automatisch und/oder ferngesteuert möglich.

In einer noch weiter vorteilhaften Ausgestaltung könnte das Fahrzeug über eine oder mehrere Anhänge-Vorrichtungen zum Anhängen von Anhängern verfügen und als Zugfahrzeug verwendet werden.

Ebenfalls vorteilhaft ausgestaltet kann das Fahrzeug über mindestens ein Stützrad zur Vermeidung von einem Umkippen des Fahrzeugs in mindestens dem ersten Betriebsmodus verfügen und/oder über mindestens einen Ständer für einen sicheren Stand des Fahrzeugs bei zum Transport demontierten Bauteilen wie Rädern etc. und/oder dem zusammengeklappten Fahrzeug im Pack-Modus.

Auch mindestens eine Aufnahme oder Aufnahmemöglichkeit zur Befestigung und zum Transport des Fahrzeugs an einer Anhängerkupplung eines Automobils ist sinnvoll.

Von besonderem Vorteil sind die Abmessungen des Fahrzeugs, so dass mindestens eine Fahrzeugachse und/oder mindestens zwei seitlich gegenüber liegende Räder ein maximales Außenmaß, quer zur Fahrzeuglängsachse in der Breite an der jeweiligen Rad-Außenkante gemessen aufweisen, welches kleiner ist als ein Maß, resultierend aus dem Durchmesser von dem größten Rad derselben Achse multipliziert mit dem Faktor 5.

Dadurch lässt sich im Pack-Modus ein besonders geringes Packmaß realisieren, nachdem z. B. Teile des Fahrzeugs wie Räder und/oder Akkus abgenommen wurden.

Das erfindungsgemäße Fahrzeug lässt sich nicht nur für den Golfsport verwenden, sondern darüber hinaus auch als Freizeitfahrzeug und/oder Einkaufsfahrzeug und/oder Transportfahrzeug und/oder Industriefahrzeug und/oder Baustellenfahrzeug und/oder Seniorenfahrzeug und/oder Behindertenfahrzeug und/oder Kinderwagen und/oder Explorationsfahrzeug und/oder Gartengerät / Mähfahrzeug und/oder Landwirtschaftsfahrzeug und/oder Militärfahrzeug.

Möglich ist beispielsweise eine Verwendung als Explorationsfahrzeug, bei der z. B. das Fahrzeug im Pack-Modus in einem Raumfahrzeug zu einem Himmelskörper transportiert wird und sich dort selbständig in den ersten Betriebs-Modus entfaltet und autonom fortbewegt. Für die Fortbewegung in Gelände, dessen Beschaffenheit sich nicht vorhersehen lässt, wäre der beschriebene Carving-Effekt ein erheblicher Vorteil gegenüber den aus dem Stand der Technik bekannten Fahrzeugen. Im zweiten Betriebsmodus würde das Fahrzeug seine Abmessungen ändern z. B. in der Breite oder Höhe bei entsprechenden räumlichen Einschränkungen. Anstelle einem/einer menschlichen Benutzer/in würde beispielsweise ein Computer, Roboter oder ähnliches das Fahrzeug lenken bzw. steuern, oder das Fahrzeug würde ferngesteuert werden.

Details der Erfindung

Erfindungsgemäß kann das Fahrzeug, auf Basis der maßgeblichen Grundeigenschaften von mindestens zwei vorwählbaren Betriebsmodi zum Mitfahren und Schieben kombiniert mit einer mindestens im ersten Betriebsmodus direkten oder indirekten zumindest teilweise vertikalen Bewegung von mindestens der zweiten und/oder dritten Fahrzeugkomponente und/oder Teilen / Unterkomponenten davon um mindestens eine Drehachse an der ersten Fahrzeugkomponente durch den/die mindestens einen/eine Benutzer/in oder einer Automatik, wodurch sich mindestens die Fahrzeuglage oder Fahrzeuglänge oder Fahrzeugbreite oder Fahrzeughöhe oder Sitzhöhe verändert, wobei sich im zweiten vorwählbaren Betriebsmodus zum Schieben, mindestens zwei Fahrzeugkomponenten und/oder Teile / Unterkomponenten davon voreingestellt in einer gegenüber mindestens dem ersten Betriebsmodus anderen Position zueinander befinden, in zahlreichen Ausgestaltungen konstruiert sowie mit zahlreichen Ausstattungsmerkmalen konzipiert werden.

Gemäß einer ersten Ausführung handelt es sich um ein mehrspuriges Fahrzeug, mit einer ersten Fahrzeugkomponente, mindestens einem lenkbaren Rad und mindestens einer zweiten und einer dritten Fahrzeugkomponente, die sich links und rechts der Fahrzeuglängsachse befinden, wobei mindestens die zweite und dritte Fahrzeugkomponente über jeweils mindestens ein Rad verfügen, also mit einem beweglichen Grundgestell.

Es bestehen mindestens zwei Betriebsmodi, ein erster Betriebsmodus, in dem mindestens ein/e Benutzer/in auf mindestens einer Fläche stehen und/oder sitzen kann, wobei mindestens ein Rad am Fahrzeug zumindest zeitweise angetrieben ist und in dem mindestens ein/e Benutzer/in oder eine Automatik mindestens die zweite und/oder dritte Fahrzeugkomponente und/oder Teile / Unterkomponenten davon direkt oder indirekt zumindest teilweise vertikal um mindestens eine Drehachse an der ersten Fahrzeugkomponente bewegen kann, wodurch sich mindestens die Fahrzeuglage oder Fahrzeuglänge oder Fahrzeugbreite oder Fahrzeughöhe oder Sitzhöhe verändert und ein zweiter vorwählbarer Betriebsmodus in dem mindestens ein/e Benutzer/in hinter oder neben dem Fahrzeug geht und in dem sich mindestens zwei Fahrzeugkomponenten und/oder Teile / Unterkomponenten davon voreingestellt in einer gegenüber mindestens dem ersten Betriebsmodus anderen Position zueinander befinden.

| Figur 1: | Fahrzeug in seitlicher Hanglage, perspektivische Ansicht |
| Figur 2: | Fahrzeug im ersten Betriebsmodus in der Ebene bei Geradeausfahrt mit stehendem Benutzer, Seitenansicht |
| Figur 3: | Fahrzeug im ersten .Betriebsmodus in der Ebene, Rückansicht |
| Figur 4: | Fahrzeug im ersten Betriebsmodus in seitlicher Hanglage, Seitenansicht |
| Figur 5: | Fahrzeug im ersten Betriebsmodus in seitlicher Hanglage bei Geradeausfahrt mit Neigungsausgleich, Rückansicht |
| Figur 6: | Fahrzeug im ersten Betriebsmodus in seitlicher Hanglage bei Kurvenfahrt mit Neigungsausgleich und stehendem Benutzer, |

Rückansicht

Figur 7: Fahrzeug im zweiten Betriebsmodus in der Ebene mit dahinter gehendem Benutzer, Seitenansicht

Figur 8: Fahrzeug im zweiten Betriebsmodus in der Ebene, Rückansicht

Figur 9: Fahrzeug im Pack-Modus in der Ebene, Seitenansicht

Figur 10: Fahrzeug im dritten Betriebsmodus im Vergleich zum ersten Betriebsmodus in seitlicher Hanglage bei Geradeausfahrt, Rückansicht

Figur 11: Fahrzeug im ersten Betriebsmodus in der Ebene bei Kurvenfahrt, Rückansicht

Figur 12: Fahrzeug im ersten Betriebsmodus in Bergabfahrt mit Neigungsausgleich, Seitenansicht

Figur 13: Fahrzeug im ersten Betriebsmodus in Bergauffahrt mit Neigungsausgleich, Seitenansicht

Figur 14: Fahrzeug in einer zweiten Ausführungsform im ersten Betriebsmodus mit dargestelltem Sitz, perspektivische Ansicht

Figur 15: Fahrzeug in einer zweiten Ausführungsform im ersten Betriebsmodus mit dargestelltem Sitz, Seitenansicht

Figur 16: Fahrzeug in einer zweiten Ausführungsform im ersten Betriebsmodus, Frontansicht

Figur 17: Fahrzeug in einer zweiten Ausführungsform im ersten Betriebsmodus mit stehendem Benutzer, perspektivische Ansicht

Figur 18: Fahrzeug in einer zweiten Ausführungsform im ersten Betriebsmodus mit sitzendem Benutzer, perspektivische Ansicht

Figur 19: Fahrzeug in einer zweiten Ausführungsform im zweiten Betriebsmodus mit dahinter gehendem Benutzer, Seitenansicht

Figur 20: Fahrzeug in einer zweiten Ausführungsform in einer weiteren Ausgestaltung im ersten Betriebsmodus, perspektivische Ansicht

Figur 21: Fahrzeug in einer dritten Ausführungsform im ersten Betriebsmodus, perspektivische Ansicht

Figur 22: Fahrzeug in einer dritten Ausführungsform im ersten Betriebsmodus in seitlicher Hanglage mit Neigungsausgleich, Rückansicht

Figur 23: Fahrzeug in einer vierten Ausführungsform im ersten oder dritten Betriebsmodus mit sitzend fahrendem Benutzer in gesenkter Sitzposition, Seitenansicht

Figur 24: Fahrzeug in einer vierten Ausführungsform in seitlicher Hanglage im dritten Betriebsmodus im Vergleich zum ersten Betriebsmodus, Rückansicht

Figur 25: Fahrzeug in einer vierten Ausführungsform im ersten oder dritten Betriebsmodus mit sitzend fahrendem Benutzer in erhöhter Sitzposition, Seitenansicht

Figur 26: Fahrzeug in einer vierten Ausführungsform im zweiten Betriebsmodus mit einer sitzenden und einer dahinter gehenden / schiebenden Person, Seitenansicht

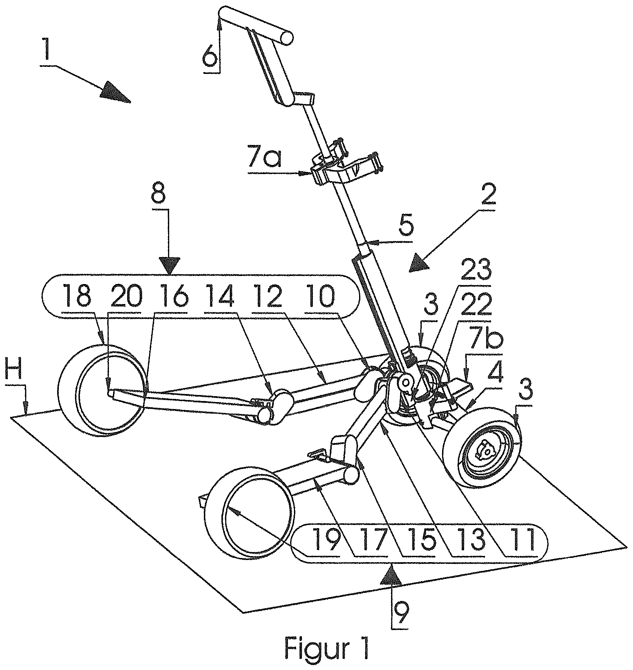

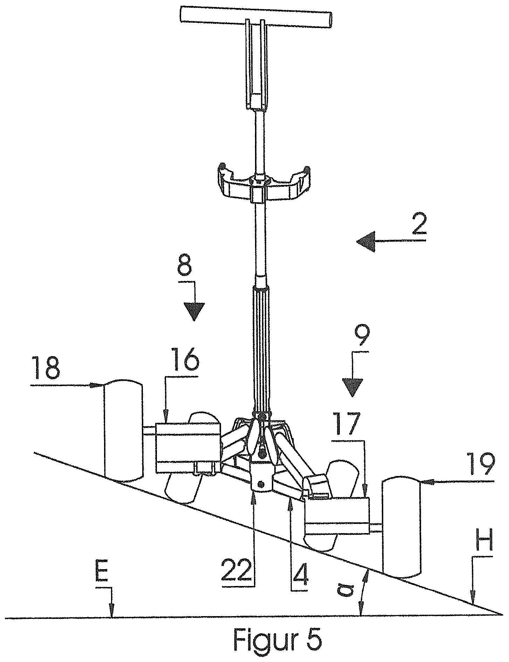

Die Figuren 1 bis 13 zeigen eine erste Ausführungsform des erfindungsgemäßen Fahrzeugs 1 in verschiedenen Betriebsmodi und Fahrzeuglagen.

Das Fahrzeug 1 weist eine erste Fahrzeugkomponente 2 auf, die in der hier beschriebenen Version mit zwei Rädern 3 an einer Vorderachse 4 als Halterung ausgestattet ist, denkbar sind jedoch auch Versionen mit einem Rad oder mehr als zwei Rädern.

Die erste Fahrzeugkomponente 2 weist weiter eine drehbar und/oder schwenkbar gelagerte Lenkstange 5 auf, an der sich ein Lenker 6 befindet. Zusätzlich befinden sich am Fahrzeug Haltevorrichtungen 7a, 7b zur Halterung mindestens eines Transportbehältnisses (z. B. einer Golftasche, einer Einkaufstasche, etc.) oder einer Gehhilfe, etc..

Über die Gelenke 10, 11 sind eine zweite Fahrzeugkomponente 8 und eine dritte Fahrzeugkomponente 9 an dem Zentralgelenk 23 angebracht, welches an der ersten Fahrzeugkomponente 2 in der Längsrichtung veränderbar befestigt ist. Jede dieser zweiten und dritten Fahrzeugkomponente umfasst jeweils ein Hebelgestänge 12, 13, ein weiteres Gelenk 14, 15, an dem jeweils ein Trittbrett 16, 17 als Stehfläche angebracht ist und daran je ein Rad 18, 19 mit je einem Motor 20, 21.

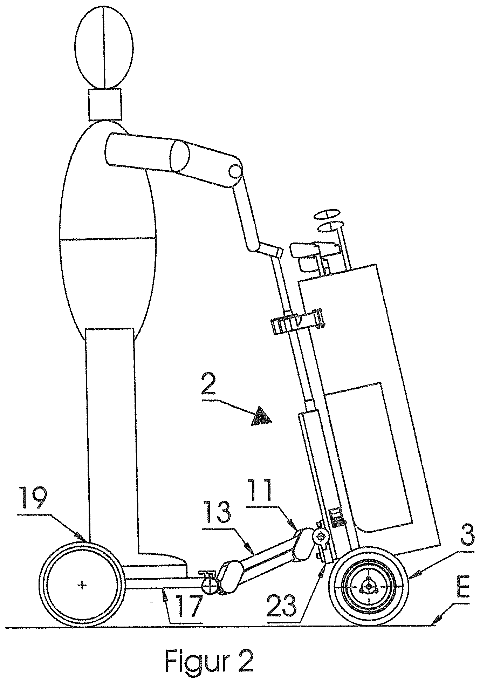

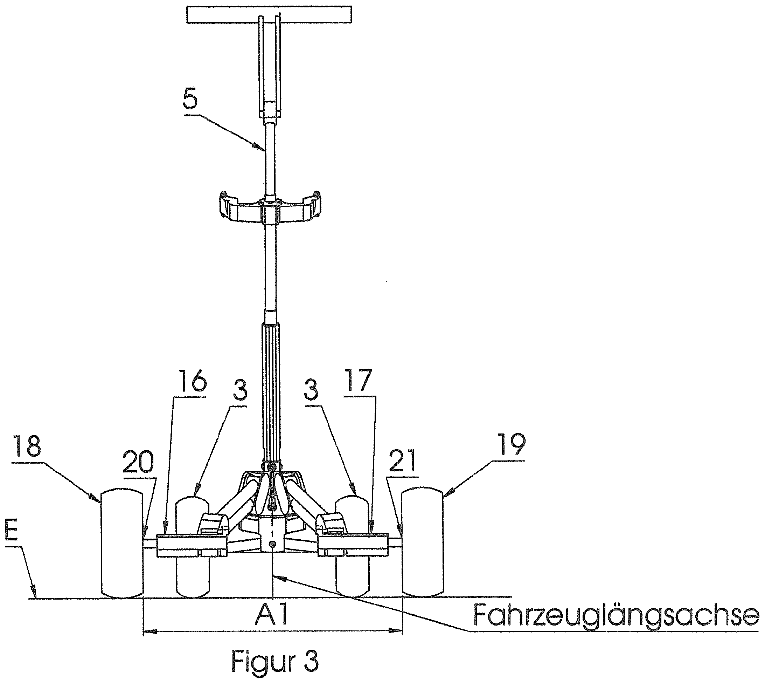

Die Figuren 2 und 3 zeigen das Fahrzeug 1 in einem ersten Betriebsmodus auf ebenem Gelände. In einer Darstellung mit angebrachter Golftasche (Figur 2) steht im ersten Betriebsmodus ein/e Benutzer/in auf den Trittbrettern 16, 17. Die Trittbretter 16, 17 stehen im Wesentlichen parallel zur Ebene E, die beiden Räder 18, 19 der Trittbretter weisen den Abstand A1 auf.

Im mindestens ersten Betriebsmodus kann das Fahrzeug 1, 100, 200, 300 seitlich geneigt werden.

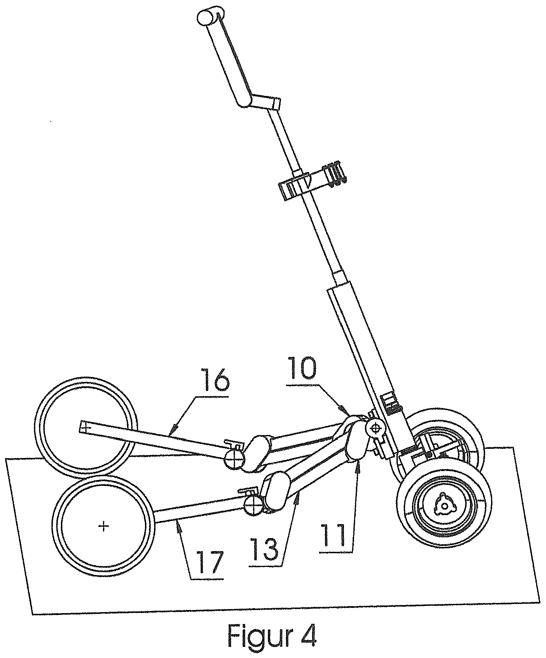

Die Figuren 4, 5, 6, 10, 22, 24 zeigen verschiedene Ausführungen des Fahrzeugs im ersten Betriebsmodus seitlich an einem Hang.

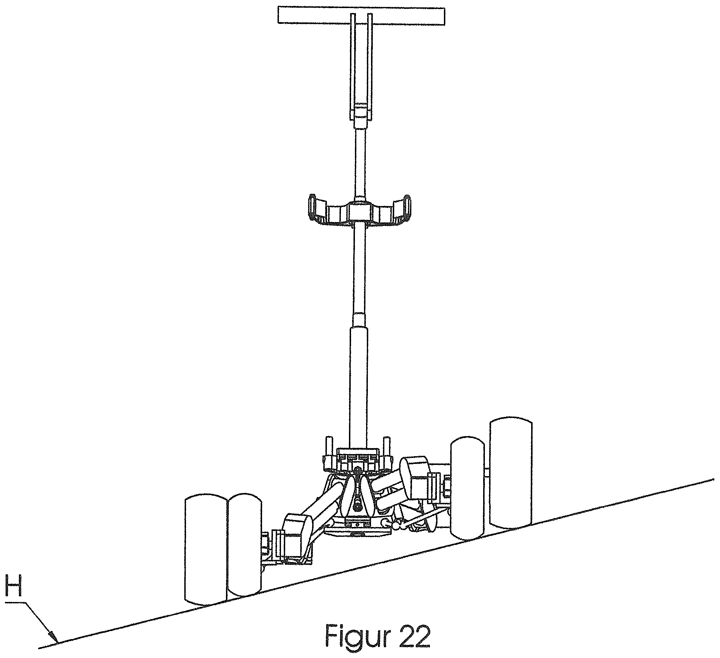

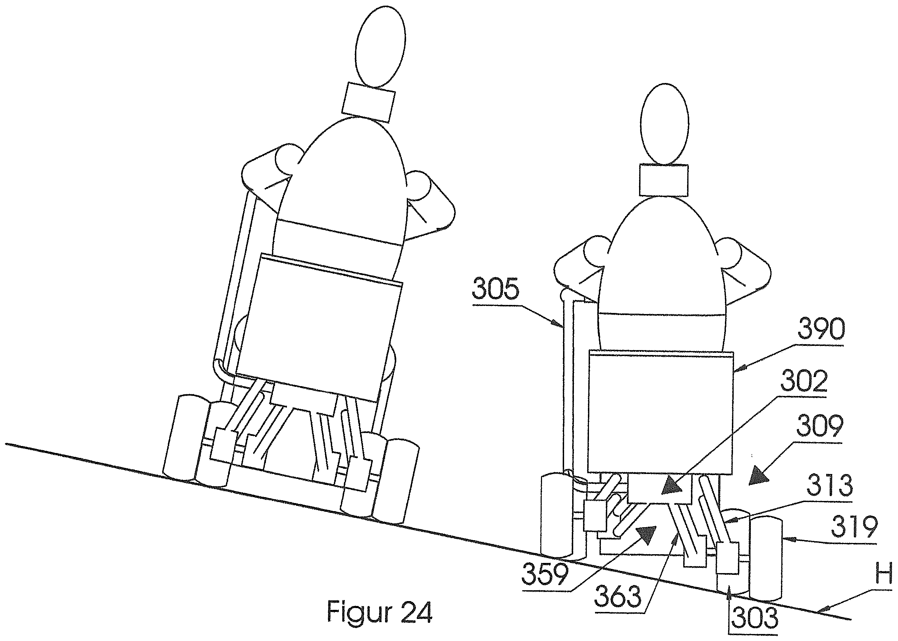

Der/die Benutzer/in oder eine Automatik hat die mindestens zweite und/oder dritte Fahrzeugkomponente 8 / 9 / 108 / 109 / 208 / 209 / 308 / 309 und/oder die vierte und/oder fünfte Fahrzeugkomponente 258 / 259 / 358 / 359 (Figur 22, 24) und/oder Teile Unterkomponenten davon im Hub einseitig oder beidseitig gleich oder ungleich zumindest teilweise vertikal direkt oder indirekt um mindestens eine Drehachse an der ersten Fahrzeugkomponente 2 / 102 / 202 / 302 in verschiedene Richtungen bewegt. Es führen also mehrere mögliche Aufhängungen dazu, seitliche Hanglagen oder Schräglagen z. B. an versetzten Ebenen durch den/die mindestens einen Benutzer/in oder eine Automatik in der Neigung ausgleichen zu können.

In den Figuren 4 bis 6 ist das Fahrzeug 1 im ersten Betriebsmodus seitlich an einem Hang dargestellt, wobei die Hangebene H um den Winkel $\alpha$ (alpha)

zur Ebene E geneigt ist.

Dargestellt befindet sich die hangabwärts gelegene dritte Fahrzeugkomponente 9 in der gleichen Position zur ersten Fahrzeugkomponente 2 wie bei der Fahrt in der Ebene E.

Das Trittbrett 17 der dritten Fahrzeugkomponente 9 bleibt in der dargestellten Konstruktion in der Position wie bei der Fahrt in der Ebene.

Die hangaufwärts gelegene zweite Fahrzeugkomponente 8 wurde in dem Gelenk 10 zumindest teilweise vertikal nach oben gedreht, wobei die Lenkstange 5 bei Geradeaus-Fahrt weiterhin in einer Position zur Fahrtrichtung steht, die im Wesentlichen der bei Fahrt in der Ebene entspricht.

Die Vorderachse 4 wurde um ein Gelenk 22 um den Winkel $\alpha$ zur Lenkstange 5 gedreht, so dass sie parallel zur Hangebene H steht.

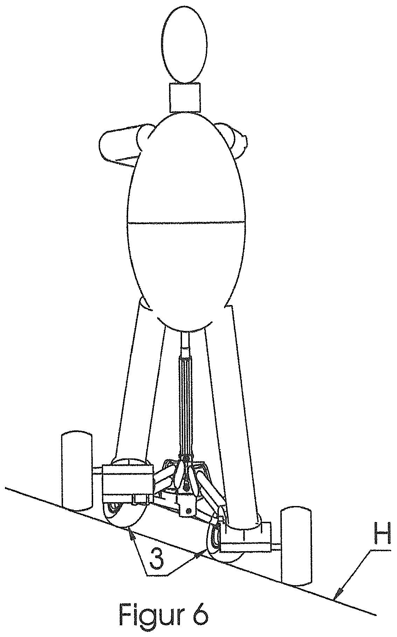

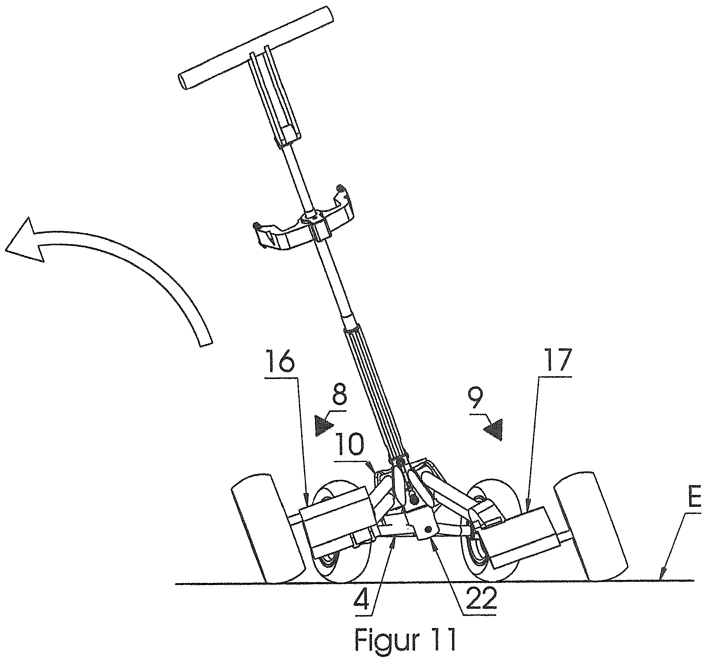

Fährt man mit dem Fahrzeug 1 im ersten Betriebsmodus in der Ebene E (Figur 11) oder seitlich an einem Hang H (Figur 6) um eine Kurve, so kann der/die mindestens eine Benutzer/in oder eine Automatik mindestens die jeweils auf der Kurveninnenseite und/oder Kurvenaußenseite gelegene mindestens zweite und/oder dritte Fahrzeugkomponente 8, 9 um ihr jeweiliges Gelenk 10, 11 bewegen, so dass der/die mindestens eine Benutzer/in in Bezug auf die Fliehkräfte bei Kurvenfahrt in einer wesentlich komfortableren Position steht, als wenn mindestens die zweite und/oder dritte Fahrzeugkomponente 8, 9 in Bezug auf die erste Fahrzeugkomponente 2 feststehen würden bzw. arretiert wären.

Im Beispiel der Figur 11 fährt das Fahrzeug 1 im ersten Betriebsmodus um eine Linkskurve. Die zweite Fahrzeugkomponente 8 wurde um das Gelenk 10 geneigt, die Vorderachse 4 wurde in dem Gelenk 22 ebenfalls geneigt.

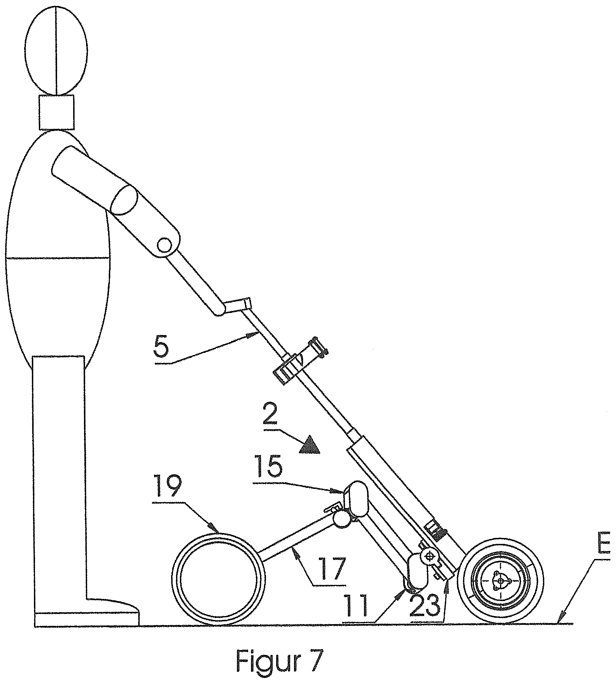

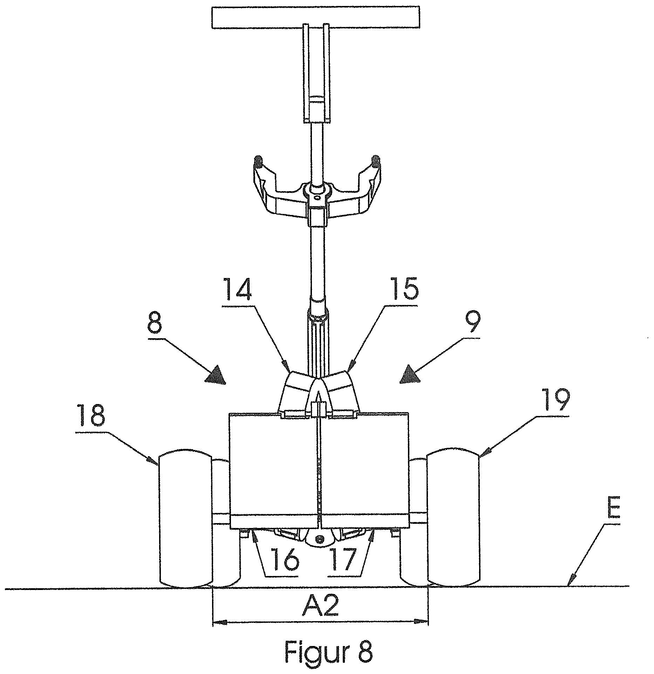

In den Figuren 7, 8, sowie, 19 und 26 ist das Fahrzeug 1, 100 und 300 in einer ersten, zweiten und vierten Ausführungsform in einem zweiten Betriebsmodus dargestellt, in dem der/die mindestens eine Benutzer/in oder eine zweite Person hinter oder neben dem Fahrzeug 1 bzw. 2 oder 4 geht und dieses entweder lenkt, während es angetrieben selbst fährt, oder schiebt, während es sich im Freilauf befindet. Die Fahrzeuge 1, 100, 200, 300 sind auch im Freilauf benutzbar. Im zweiten Betriebsmodus befinden sich mindestens zwei Fahrzeugkomponenten und/oder Teile / Unterkomponenten davon in einer gegenüber mindestens dem ersten Betriebsmodus anderen Position zueinander, so dass sich z.B. durch eine geänderte Stellung der Lenkstange und/oder anderer Fahrzeugteile, ein zum Schieben vorteilhafter Fahrzeugstand ergibt. Beispielsweise ist in Figur 7 die Lenkstange im zweiten Betriebsmodus im Vergleich zum ersten Betriebsmodus nach hinten geneigt.

In diesem zweiten Betriebsmodus lässt sich das Fahrzeug 1 auch an Orten nutzen bzw. mitführen, an denen das Fahren im mindestens ersten Betriebsmodus nicht möglich ist, wie beispielsweise neben einem Grün eines Golfplatzes oder im Gebäudeinneren eines Supermarktes. Dabei weist das Fahrzeug 1 eine kompaktere Form als im ersten Betriebsmodus auf, die dadurch eingestellt wird, dass mindestens die zweite und dritte Fahrzeugkomponente 8, 9 um die vier Gelenke 10, 11 sowie 14, 15 in Richtung der ersten Fahrzeugkomponente 2 angeklappt werden. Die Fahrzeuglänge ist dadurch geringer als im ersten Betriebsmodus (Figur 7).

Wie insbesondere die Figur 8 zeigt, wird dabei weiter ein Abstand A2 der beiden Räder 18, 19 eingestellt, der kleiner als der Abstand A1 im ersten Betriebsmodus (vgl. Figur 3) ist. Dieser geringere Abstand der beiden Räder 18, 19 bewirkt in dieser Ausführung / Konstruktion auch eine insgesamt geringere Breite des Fahrzeugs 1 als im ersten Betriebsmodus, die es erlaubt, das Fahrzeug auch zwischen den Regalen eines Geschäftes oder zwischen zwei Begrenzungspfosten hindurch zu schieben bzw. zu lenken.

Das Fahrzeug 1 kann ebenso über eine/mehrere Mechanik/en und/oder einen/mehrere Antrieb/e verfügen, wodurch der Übergang von einem Betriebsmodus in einen anderen Betriebsmodus und/oder einem Betriebsmodus in den Pack-Modus und/oder umgekehrt und/oder die Änderung der Sitzhöhe und/oder Fahrzeughöhe und/oder Fahrzeuglänge und/oder Fahrzeugbreite automatisch und/oder ferngesteuert ermöglicht wird.

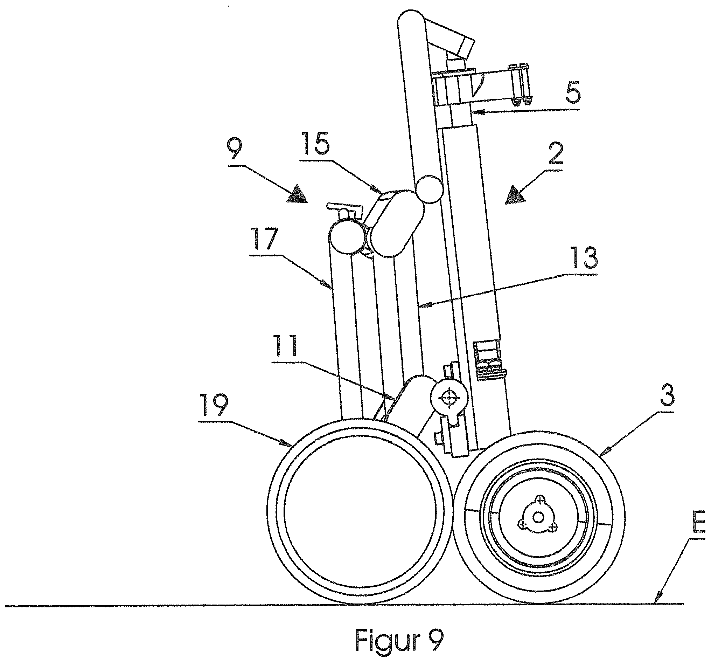

Die Figur 9 zeigt das Fahrzeug 1 in einem Pack-Modus, in dem es beispielsweise in dem Kofferraum eines PKW verstaut werden kann. Im Pack-Modus befinden sich die Räder 18, 19 näher an der ersten Fahrzeugkomponente 2 als mindestens im ersten und/oder zweiten Betriebsmodus. Hierbei sind die zweite und die dritte Fahrzeugkomponente 8, 9 um die Gelenke 10, 11 sowie 14, 15 so weit in Richtung der ersten Fahrzeugkomponente 2 angeklappt, dass sich die Hebelgestänge 12, 13 sowie die Trittbretter 16, 17 jeweils in im Wesentlichen paralleler Position zur Lenkstange 5 befinden, wodurch sich eine kompaktere Größe als im mindestens ersten und/oder zweiten Betriebsmodus ergibt.

Eine Ausstattung mit mindestens einem zusätzlichen Ständer (nicht dargestellt) kann dabei einen stabilen Stand des Fahrzeugs 1 im Pack-Modus unterstützen.

Das Fahrzeug 1 kann auch für den Transport über mindestens eine Aufnahmemöglichkeit zur Befestigung an einer Anhängerkupplung eines Automobils verfügen.

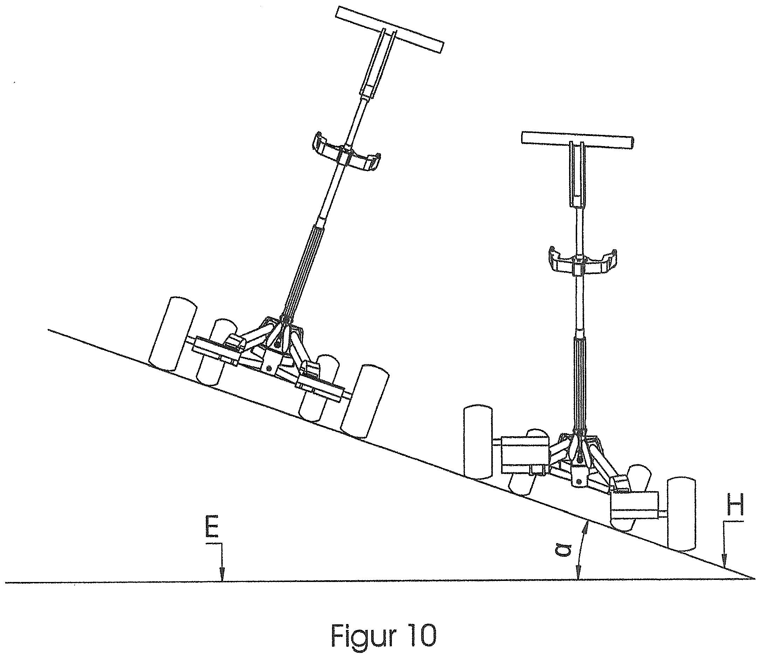

Die Figur 10 zeigt links das Fahrzeug 1 in einer vorteilhaften Version, die einen vorwählbaren zusätzlichen dritten Betriebsmodus aufweist, in dem die Gelenke 10, 11, 14, 15 durch Vorwahl von mindestens einem/einer Benutzer/in oder einer Automatik arretiert sind. Dieser Modus erlaubt den Betrieb des Fahrzeugs wahlweise auch so, dass er dem Betriebsprinzip bekannter Fahrzeuge entspricht. Die Trittflächen auf den Trittbrettern befinden sich dabei im Wesentlichen in einer Lage parallel zum Hang.

Der Vergleich mit dem rechts daneben dargestellten Fahrzeug 1 im ersten Betriebsmodus zeigt, dass im ersten Betriebsmodus eine ruhige stabile Körperposition über dem Fahrzeug mit einer vorteilhaften Standposition eingenommen werden kann, während sich im dritten Betriebsmodus das Fahrzeug unangenehm zum Kippen neigt.

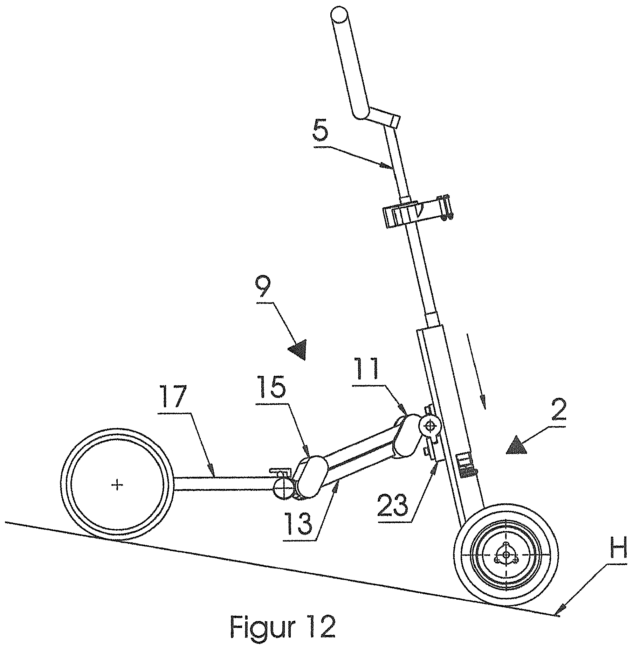

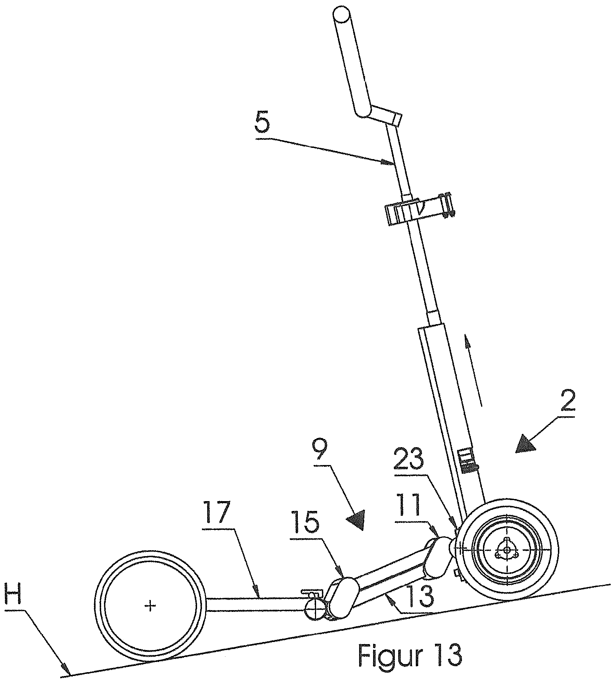

In den Figuren 12 und 13 befindet sich das Fahrzeug 1 im ersten oder dritten Betriebsmodus in einer Bergab- / Bergauflage, in der die Neigung des Gefälles (Figur 12) bzw. der Steigung (Figur 13) durch entsprechende Mechanik/en und Antriebe sowie mindestens einen Neigungssensor automatisch ausgeglichen wurde.

Dabei hat sich die erste Fahrzeugkomponente 2 in ihrer Position an dem Zentralgelenk 23, in Richtung des jeweils in der Bergablage (Figur 12) oder Bergauflage (Figur 13) dargestellten Pfeils verändert. Ebenso könnte der Neigungsausgleich jedoch auch über die Gelenke 10, 11, 14, 15 und die Hebelgestänge 12, 13 erfolgen, auch weitere Konstruktionen sind denkbar.

Für eine zusätzliche Sicherheit bei Bergauffahrt mit entsprechender Steigung kann die Gefahr durch nach hinten Kippen über mindestens ein zusätzliches Stützrad (nicht dargestellt) an der mindestens zweiten und/oder dritten Fahrzeugkomponente 8, 9 wesentlich reduziert werden.

In der in den Figuren 1 bis 13 dargestellten Ausführung verfügt das Fahrzeug 1 über zwei Motoren 20, 21 in den Radnaben der Räder 18, 19, die elektrisch über einen/mehrere Akku/s (nicht dargestellt) und eine/mehrere Steuerelektronik/en (nicht dargestellt) angetrieben werden können. Ebenso kann das Fahrzeug aber auch mit mehreren Motoren / antreibbaren Rädern ausgestattet sein, wie z. B. in einer Allrad-Version.

Es sind auch andere Antriebe möglich, wie ein Verbrennungsmotor, ein einzelner oder mehr als zwei Elektromotoren oder per Muskelkraft über Pedalen gemäß dem Prinzip eines Fahrrads.

Als Zugfahrzeug kann das Fahrzeug 1 ebenfalls verwendet werden, indem es über eine oder mehrere Anhänge-Vorrichtungen zum Anhängen von Anhängern verfügt.

Zum Transport besteht die Möglichkeit, die Räder, die Motoren sowie weitere Bauteile, wie z. B. die Trittbretter mit den Akkus abzunehmen, um das anzuhebende Gewicht z. B. beim Verladen in den Kofferraum eines PKW zu reduzieren.

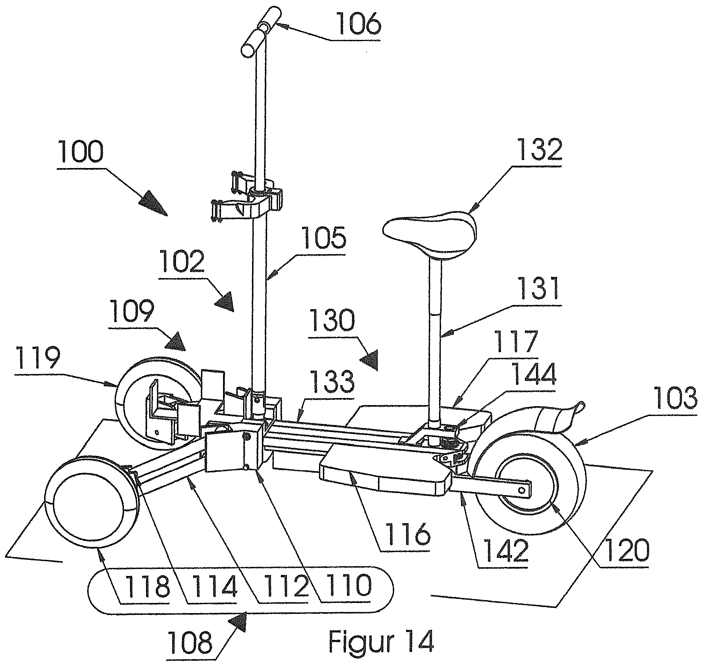

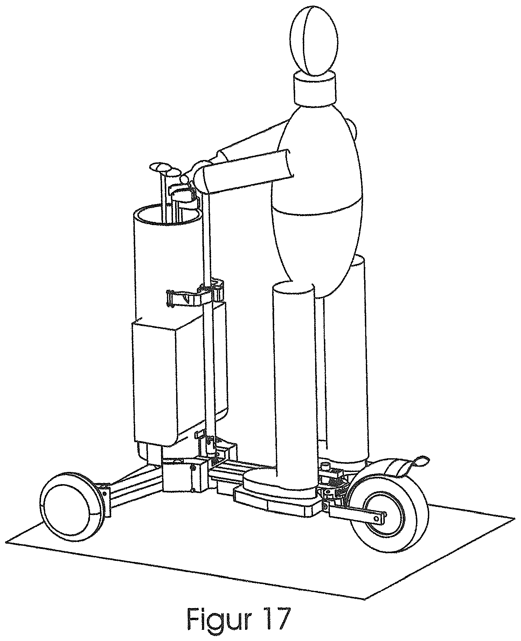

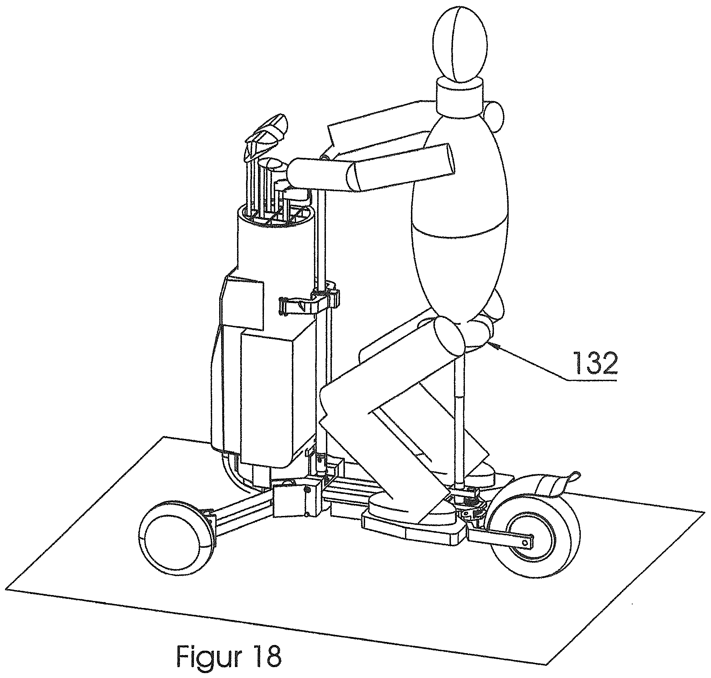

Die Figuren 14 bis 19 zeigen ein Fahrzeug 100, das eine zweite Ausführungsform des erfindungsgemäßen Fahrzeugs darstellt.

Analog zum Fahrzeug 1 weist das Fahrzeug 100 eine erste Fahrzeugkomponente 102 mit einer drehbar und/oder schwenkbar gelagerten Lenkstange 105 auf, an der sich ein Lenker 106 befindet. Zusätzlich befinden sich an der ersten Fahrzeugkomponente 102 eine oder mehrere Haltevorrichtungen 107a, 107b zur Halterung mindestens eines Transportbehältnisses (z. B. einer Golftasche, einer Einkaufstasche, etc.) oder einer Gehhilfe, etc. oder auch mehrerer Trittbretter und/oder Sitzflächen für weitere Personen.

Weiter analog weist das Fahrzeug 100 eine zweite Fahrzeugkomponente 108, mit zwei Gelenken 110 und 114, dazwischen ein Hebelgestänge 112, ein Rad 118, sowie eine dritte Fahrzeugkomponente 109 auf, mit zwei Gelenken 111 und 115, dazwischen ein Hebelgestänge 113, und ein Rad 119. Die zweite und die dritte Fahrzeugkomponente 108, 109 befinden sich in dieser Ausführungsform in Fahrtrichtung vorne seitlich links und rechts an der ersten Fahrzeugkomponente 102.

Das lenkbare Rad 103 befindet sich an einer vierten Fahrzeugkomponente 130, welche aus zwei Unterkomponenten 133 und 142 besteht, die durch ein Gelenk 140 verbunden sind. Dabei wird die Lenkbewegung von dem Lenker 106 über die Lenkstange 105 und eine Mechanik, wie z. B. eine über Kreuz geführte Kette oder Riemen also indirekt auf das Rad 103 übertragen. Zusätzlich kann das Rad 103 über den Motor 120 angetrieben werden, bzw. das Fahrzeug mit mehreren Motoren z. B. als Allrad-Version.

Ebenfalls auf der vierten Fahrzeugkomponente 130 befinden sich Trittbretter 116, 117, auf die mindestens ein/e Benutzer/in mindestens im ersten und/oder dritten Betriebsmodus die Füße stellt.

Auf der vierten Fahrzeugkomponente kann zusätzlich mindestens eine Sitzstange 131 mit mindestens einer Sitzmöglichkeit 132 angebracht sein.

Das Fahrzeug 100 in der zweiten Ausführungsform hat einen ersten, zweiten und in einer vorteilhaften Version einen dritten Betriebsmodus, sowie weiter vorteilhaft einen Pack-Modus analog dem des Fahrzeug 1 in der ersten Ausführungsform.

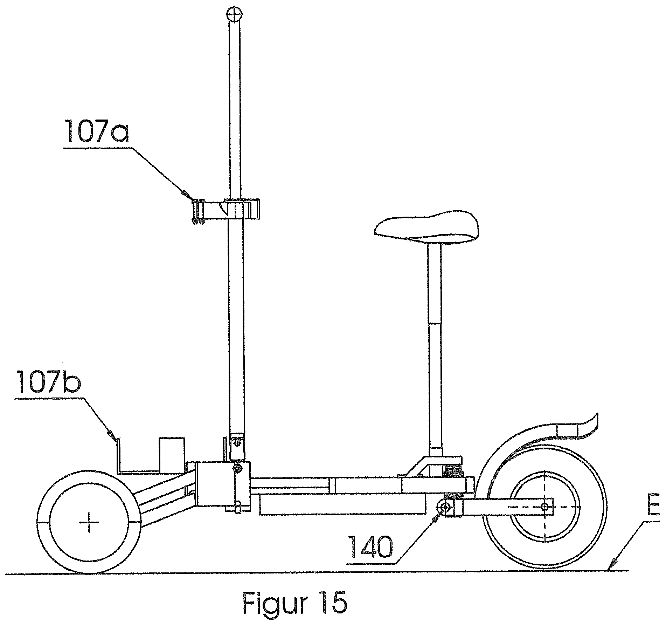

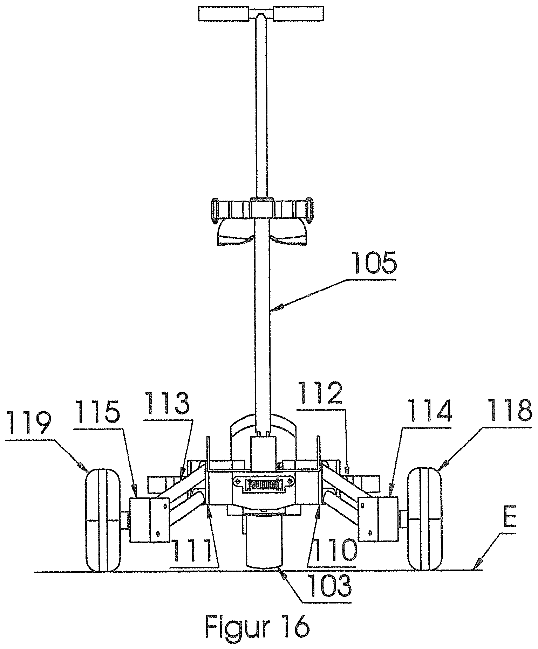

Im ersten einstellbaren Betriebsmodus funktioniert das Fahrzeug 100 wie in der ersten Ausführungsform, wobei der/die mindestens eine Benutzer/in oder eine Automatik mindestens am seitlichen Hang sowie in Schräglagen z. B. an versetzten Ebenen bzw. bei Kurvenfahrt die hangaufwärts und/oder hangabwärts bzw. auf der Kurveninnenseite und/oder Kurvenaußenseite gelegene mindestens zweite und/oder dritte Fahrzeugkomponente 108, bzw. 109 um das Gelenk 110 bzw. 111 an der ersten Fahrzeugkomponente 102 zumindest teilweise vertikal bewegen kann, wodurch auch der Carving-Effekt entsteht. Dabei kann der/die mindestens eine Benutzer/in auf den Trittbrettern 116 und 117 stehen oder auf der Sitzgelegenheit 132 sitzen, siehe Figuren 15 und 16 mit dargestellter Golftasche.

Das Fahrzeug 100 kann ebenso über eine/mehrere Mechanik/en und/oder einen/mehrere Antrieb/e verfügen, wodurch der Übergang von einem Betriebsmodus in einen anderen Betriebsmodus und/oder einem Betriebsmodus in den Pack-Modus und/oder umgekehrt und/oder die Änderung der Sitzhöhe und/oder Fahrzeughöhe und/oder Fahrzeuglänge und/oder Fahrzeugbreite automatisch und/oder ferngesteuert ermöglicht wird.

Eine Ausstattung mit mindestens einer Mechanik und/oder mindestens einem Antrieb mit Unterstützung von Steuerelektronik sowie zusätzlichen Neigungssensoren ermöglicht mindestens im ersten Betriebsmodus auch die automatische Neigungsanpassung von Fahrzeugkomponenten und/oder Teilen / Unterkomponenten davon an die Steigung bzw. das Gefälle mindestens bei Bergauf- / Bergabfahrt und/oder in seitlichen Hanglagen sowie in Schräglagen z. B. an versetzten Ebenen.

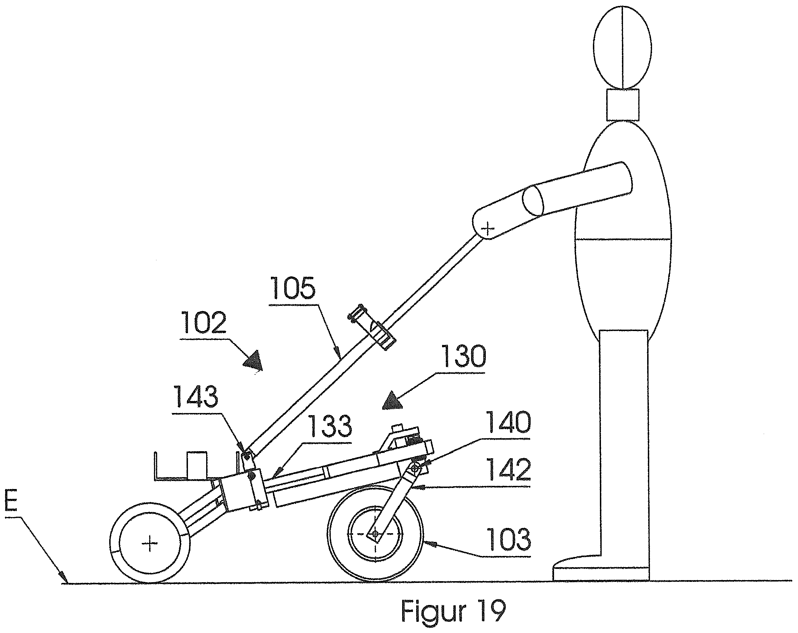

Weiter ist im zweiten einstellbaren Betriebsmodus die Länge der vierten Fahrzeugkomponente 130 verkürzt, nachdem die Unterkomponente 142 um das Gelenk 140 gegen die Unterkomponente 133 angeklappt wurde (siehe Figur 19). Zusätzlich wurde die Lenkstange 105 um das Gelenk 143 an der ersten Fahrzeugkomponente 102 in Richtung der Komponente 133 geklappt, so dass der/die Benutzer/in hinter oder neben dem Fahrzeug 100 gehen kann um das Fahrzeug 100 entweder zu lenken, während das Fahrzeug 100 angetrieben selbst fährt, oder zu schieben, während es sich im Freilauf befindet, z. B. wenn örtlich bedingt das Fahren im Mitfahrmodus nicht möglich und/oder nicht zulässig ist. Die Fahrzeuge 1, 100, 200, 300 sind ebenso im Freilauf benutzbar.

Auch hier kann in einer vorteilhaften Version ein dritter Betriebsmodus eingestellt werden, in dem die zweite und die dritte Fahrzeugkomponente 108, 109 in den Gelenken 110, 111 an der ersten Fahrzeugkomponente 102 in einer festen Position arretiert sind.

Im Pack-Modus wird das Fahrzeug 100 analog wie in der ersten Ausführungsform zusammengeklappt, wobei zusätzlich die fakultative Sitzstange 131 angeklappt werden kann. Auch in der zweiten Ausführungsform kann die Möglichkeit bestehen, zum Transport einzelne Bauteile abzunehmen. Die Figur 19 zeigt eine Ausführung ohne Sitzstange.

Das Fahrzeug 100 in der zweiten Ausführungsform verfügt analog wie in der ersten Ausführungsform über die gleiche Ausstattung.

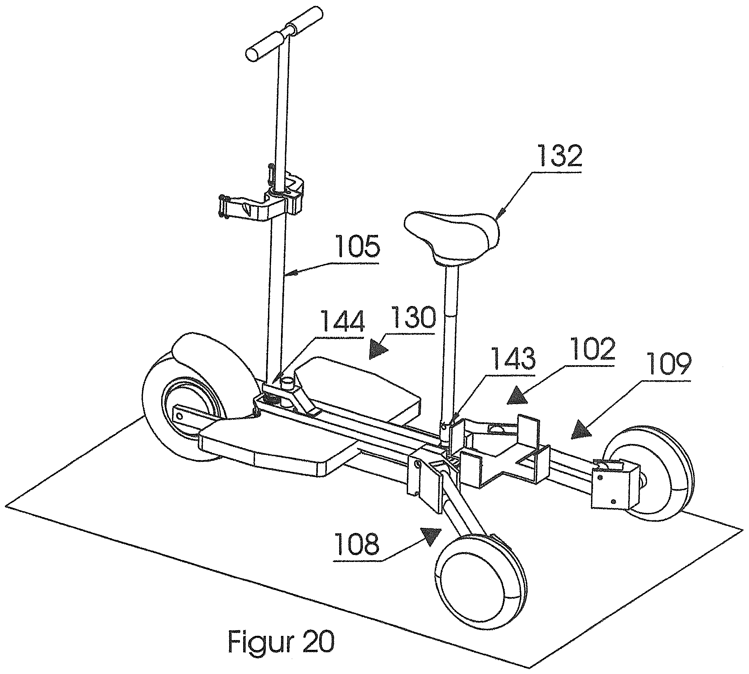

Die Figur 20 zeigt die zweite Ausführungsform des erfindungsgemäßen Fahrzeugs in einer weiteren Ausgestaltung. Dabei ist die Position der Lenkstange 105 von der Lagerung 143 der Fahrzeugkomponente 102 derart in die Lagerung 144 der vierten Fahrzeugkomponente 130 gewechselt worden, dass das Fahrzeug in entgegengesetzter Richtung benutzt werden kann. In dieser Konstellation wechselt auch der Sitz 132 seine Position und zwar in die Lagerung 143.

Auch in dieser Ausgestaltung verfügt das Fahrzeug analog zu der beschriebenen zweiten Ausführungsform über die gleiche Ausstattung.

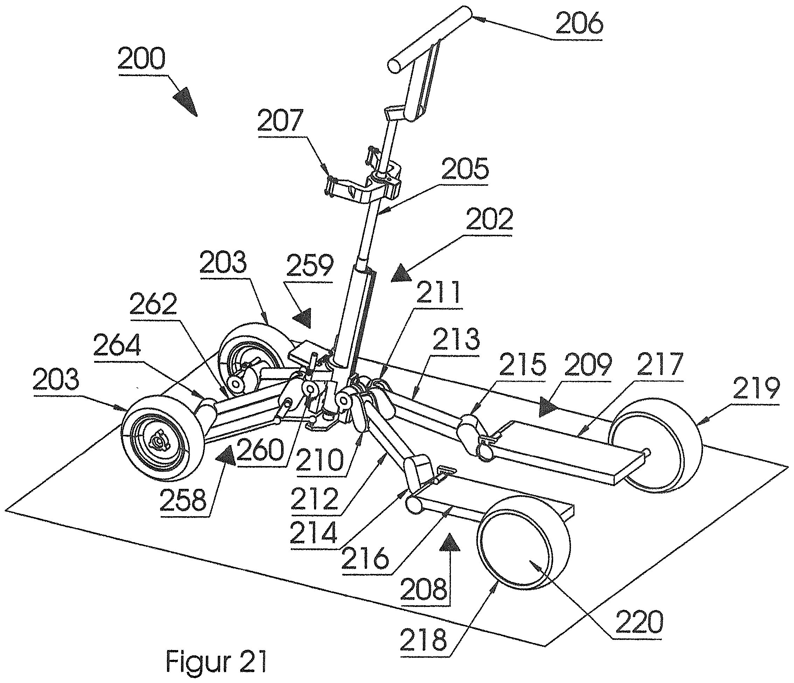

Die Figuren 21 und 22 zeigen ein Fahrzeug 200, das eine dritte Ausführungsform des erfindungsgemäßen Fahrzeugs darstellt.

Analog zum Fahrzeug 1 weist das Fahrzeug 200 eine erste Fahrzeugkomponente 202 mit einer drehbar und/oder schwenkbar gelagerten Lenkstange 205 auf, an der sich ein Lenker 206 befindet. Zusätzlich befinden sich an der ersten Fahrzeugkomponente 202 eine oder mehrere Haltevorrichtungen 207 zur Halterung mindestens eines Transportbehältnisses (z. B. einer Golftasche, einer Einkaufstasche, etc.) oder einer Gehhilfe, etc. oder auch weiterer Trittbretter und/oder Sitzflächen für weitere Personen.

Weiter analog weist das Fahrzeug 200 eine zweite Fahrzeugkomponente 208, mit zwei Gelenken 210 und 214, dazwischen ein Hebelgestänge 212, ein Trittbrett 216, ein Rad 218, sowie eine dritte Fahrzeugkomponente 209, mit zwei Gelenken 211 und 215, dazwischen ein Hebelgestänge 213, ein Trittbrett 217 und ein Rad 219 auf. Die zweite und die dritte Fahrzeugkomponente 208, 209 befinden sich in dieser Ausführungsform analog zum Fahrzeug 1 an der ersten Fahrzeugkomponente 202 in Fahrtrichtung hinten.

Desweiteren befinden sich an der ersten Fahrzeugkomponente 202 eine vierte Fahrzeugkomponente 258, mit zwei Gelenken 260 und 264, dazwischen ein Hebelgestänge 262 und ein lenkbares Rad 203 sowie eine fünfte Fahrzeugkomponente 259, mit zwei Gelenken 261 und 265, dazwischen ein Hebelgestänge 263 und ein lenkbares Rad 203. Die vierte und fünfte Fahrzeugkomponente 258 , 259 befinden sich an der ersten Fahrzeugkomponente 202 in Fahrtrichtung vorne.

Dabei wird die Lenkbewegung von dem Lenker 206 über die Lenkstange 205 auf die Räder 203 übertragen. Zusätzlich können die Räder 203 über die Motoren 220, 221 angetrieben werden, sowie mit weiteren Motoren z. B. als Allrad-Version.

Das Fahrzeug 200 in der dritten Ausführungsform hat mindestens einen ersten, zweiten und in einer vorteilhaften Version einen dritten Betriebsmodus, sowie weiter vorteilhaft einen Pack-Modus analog dem des Fahrzeug 1 in der ersten Ausführungsform.

Im ersten einstellbaren Betriebsmodus funktioniert das Fahrzeug 200 wie in der ersten Ausführungsform, wobei durch den/die mindestens einen/eine Benutzer/in oder eine Automatik mindestens am seitlichen Hang sowie in Schräglagen z. B. an versetzten Ebenen bzw. bei Kurvenfahrt die hangaufwärts und/oder hangabwärts oder oben und/oder unten bzw. auf der Kurveninnenseite und/oder Kurvenaußenseite gelegene mindestens zweite und/oder dritte Fahrzeugkomponente 208, bzw. 209 um das Gelenk 210 bzw. 211 an der ersten Fahrzeugkomponente 202 zumindest teilweise vertikal bewegt wird/werden, wodurch auch der Carving-Effekt entsteht. Dabei kann der/die mindestens eine Benutzer/in auf den Trittbrettern 216 und 217 stehen.

Die Figur 22 zeigt eine mögliche Ausgestaltung der dritten Ausführungsform 200, in einer seitlichen Hanglage, bei der auch die vierte und/oder fünfte Fahrzeugkomponente 258, 259 über die Gelenke 260, 261 an der ersten Fahrzeugkomponente bewegt wurden.

Das Fahrzeug 200 kann ebenso über eine/mehrere Mechanik/en und/oder einen/mehrere Antrieb/e verfügen, wodurch der Übergang von einem Betriebsmodus in einen anderen Betriebsmodus und/oder einem Betriebsmodus in den Pack-Modus und/oder umgekehrt und/oder die Änderung der Sitzhöhe und/oder Fahrzeughöhe und/oder Fahrzeuglänge und/oder Fahrzeugbreite automatisch und/oder ferngesteuert ermöglicht wird.

Eine Ausstattung mit mindestens einer Mechanik und/oder mindestens einem Antrieb mit Unterstützung von Steuerelektronik sowie zusätzlichen Neigungssensoren ermöglicht mindestens im ersten Betriebsmodus auch die automatische Neigungsanpassung von Fahrzeugkomponenten und/oder Teilen / Unterkomponenten davon an die Steigung bzw. das Gefälle mindestens bei Bergauf- / Bergabfahrt und/oder in seitlichen Hanglagen sowie in Schräglagen z. B. an versetzten Ebenen und/oder die Neigung in Kurven.

Weiter ist im zweiten einstellbaren Betriebsmodus die Länge der zweiten und dritten Fahrzeugkomponente 208, 209 verkürzt. Zusätzlich wird die Lenkstange 205 um das Gelenk 210 und 211 an der ersten Fahrzeugkomponente 202 in Richtung der Komponenten 208, 209 geklappt, so dass der/die mindestens eine Benutzer/in hinter oder neben dem Fahrzeug 200 gehen kann um das Fahrzeug 200 entweder zu lenken, während das Fahrzeug 200 angetrieben selbst fährt, oder zu schieben, während es sich im Freilauf befindet, z. B. wenn örtlich bedingt das Fahren im Mitfahrmodus nicht möglich und /oder nicht zulässig ist. Das Fahrzeug 200 kann auch im Freilauf benutzt werden.

Auch hier kann in einer vorteilhaften Version ein dritter Betriebsmodus eingestellt werden, in dem mindestens die zweite und/oder dritte und/oder vierte und/oder fünfte Fahrzeugkomponente 208, 209, 258, 259 in den Gelenken 210, 211, 260, 261 an der ersten Fahrzeugkomponente 202 in einer festen Position arretiert sind.

Das Fahrzeug 200 in der dritten Ausführungsform verfügt ansonsten analog wie in der beschriebenen ersten Ausführungsform 1 über die gleiche Ausstattung.

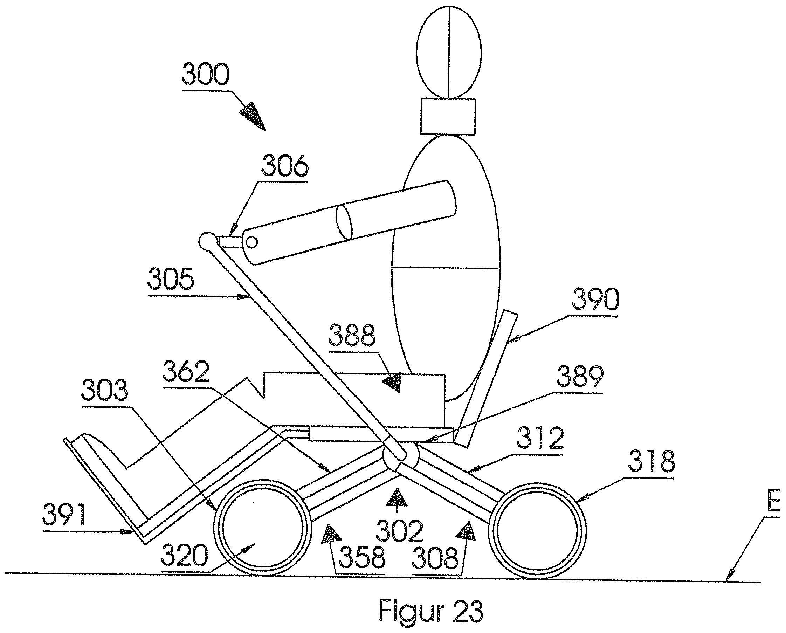

Die Figuren 23 - 26 zeigen ein Fahrzeug 300, das eine vierte Ausführungsform des erfindungsgemäßen Fahrzeugs darstellt.

Das Fahrzeug 300 weist eine erste Fahrzeugkomponente 302 mit einer drehbar und/oder schwenkbar gelagerten Lenkstange 305 auf, an der sich ein Lenker 306 befindet.

Weiter weist das Fahrzeug 300 eine zweite Fahrzeugkomponente 308, mit einem Hebelgestänge 312, einem Rad 318, sowie eine dritte Fahrzeugkomponente 309 mit einem Hebelgestänge 313 und einem Rad 319 auf. Die zweite und dritte Fahrzeugkomponente 308, 309 befinden sich in dieser Ausführungsform an der ersten Fahrzeugkomponente 302 in Fahrtrichtung hinten.

Desweiteren befinden sich an der ersten Fahrzeugkomponente 302 eine vierte Fahrzeugkomponente 358 mit einem Hebelgestänge 362, einem lenkbaren Rad 303 sowie eine fünfte Fahrzeugkomponente 359, mit einem Hebelgestänge 363 und einem weiteren lenkbaren Rad 303. Die vierte und fünfte Fahrzeugkomponente 358, 359 befinden sich in dieser Ausführungsform an der ersten Fahrzeugkomponente 302 in Fahrtrichtung vorne.

Außerdem befindet sich an der ersten Fahrzeugkomponente 302 eine sechste Fahrzeugkomponente 388 mit mindestens einer Sitzfläche 389, optional mindestens einer Sitzlehne 390, optional mindestens einer Fußabstellfläche 391, sowie optional einer/mehrerer Haltevorrichtung/en zur Halterung mindestens eines Transportbehältnisses (nicht dargestellt) z. B. einer Einkaufstasche oder Gehhilfe etc. oder auch für Trittbretter und/oder Sitzflächen für weitere Personen.

Es können allerdings ebenso weitere Hebelgestänge eingesetzt werden, auch mehrere Gelenke und/oder weitere Bauteile sind konstruktiv denkbar.

Dabei wird die Lenkbewegung von dem Lenker 306 über die Lenkstange 305 auf die Räder 303 übertragen. Es ist aber auch denkbar, die Lenkung elektrisch auszuführen. Zusätzlich können die Räder 303 über Motoren 320, 321 elektrisch über Akkus (nicht dargestellt) angetrieben werden. Möglich ist es auch, stattdessen oder zusätzlich die Räder der zweiten und dritten Fahrzeugkomponenten 308, 309 mit Motoren auszustatten und/oder das Fahrzeug 300 z. B. als Allrad-Version anzutreiben und/oder diese Räder lenken zu können.

Es sind auch andere Antriebe möglich, wie ein Verbrennungsmotor, oder per Muskelkraft über Pedalen gemäß dem Prinzip eines Fahrrads.

Das Fahrzeug 300 in der vierten Ausführungsform hat mindestens einen ersten, zweiten und in einer vorteilhaften Version einen dritten Betriebsmodus, sowie weiter vorteilhaft einen Pack-Modus, analog zu der ersten Ausführungsform.

Die Figur 23 zeigt das Fahrzeug 300 im ersten und/oder dritten Betriebsmodus mit einem sitzend fahrenden Benutzer in einer gesenkten Sitzposition. Das Fahrzeug 300 verfügt an der ersten Fahrzeugkomponente über die Ausstattung von einem/mehreren Antrieb/en sowie Sensoren (nicht dargestellt). Dadurch kann über verschiedene Gelenke und/oder Hebelgestänge (nicht dargestellt) im mindestens ersten und/oder dritten Betriebsmodus die Sitzhöhe verändert werden und/oder automatisch die Neigung von seitlichen Hanglagen und Schräglagen z.B. an versetzten Ebenen und in Kurven sowie das Gefälle bei Bergabfahrt und die Steigung bei Bergauffahrt ausgeglichen werden.

Eine höhere Sitzposition wird dabei eingestellt, indem an entsprechenden Gelenken (nicht dargestellt) an der ersten Fahrzeugkomponente 302 gleichmäßig die Fahrzeugkomponenten 308, 309 in Fahrtrichtung nach vorne und die Fahrzeugkomponenten 358, 359 in Fahrtrichtung nach hinten, also zueinander gedreht werden. Die gleiche aber einseitige Bewegung der zweiten und vierten Fahrzeugkomponente 308, 358 bzw. dritten und fünften Fahrzeugkomponente 309, 359 kann durch den/die mindestens einen/eine Benutzer/in oder eine Automatik in seitlichen Hanglagen sowie in Schräglagen z. B. an versetzten Ebenen und in Kurven ausgeführt werden. Dadurch entsteht auch der sogenannte Carving-Effekt.

Der Ausgleich der Neigung von Steigung und Gefälle bei Bergauf- / Bergabfahrt erfolgt an der ersten Fahrzeugkomponente 302, indem die sechste Fahrzeugkomponente 388 mit dem Sitz 389, der Sitzlehne 390 und der/den Fußablage/n 391 in der jeweiligen Position in Fahrtrichtung vorne und/oder hinten elektrisch angehoben bzw. gesenkt wird. Das Fahrzeug 300 kann auch mit mindestens einem Trittbrett für mindestens eine zweite Person ausgestattet sein, welches in der zuvor beschriebenen Weise seine Lage innerhalb der sechsten Fahrzeugkomponente ebenfalls automatisch verändert.

Diese Funktionen bieten dem Benutzer eine flexible Anpassung an die örtlichen Gegebenheiten mit einem verbesserten Fahrgefühl und einer erhöhten Kippsicherheit.

Für eine zusätzliche Sicherheit bei Bergauffahrt mit entsprechender Steigung kann die Gefahr durch ein nach hinten Kippen über mindestens ein zusätzliches Stützrad an der mindestens zweiten und/oder dritten Fahrzeugkomponente 308, 309 nochmals reduziert werden.

Der Vergleich in der Figur 24, zeigt eindeutig eine nachteilige starre Ausführung des Fahrzeugs 300 in dem hier dargestellten dritten Betriebsmodus in seitlicher Hanglage (linke Abbildung). Dabei wurde mindestens die zweite und/oder dritte und/oder vierte und/oder fünfte Fahrzeugkomponente 308, 309, 358, 359 an Gelenken (nicht dargestellt) an der ersten Fahrzeugkomponente in einer festen Position arretiert.

Die durch den/die mindestens einen/eine Benutzer/in oder eine Automatik im mindestens ersten Betriebsmodus angepasste Neigung (rechte Abbildung) erlaubt weiterhin mindestens eine Sitzfläche und/oder Standfläche in einer vorteilhaften Position.

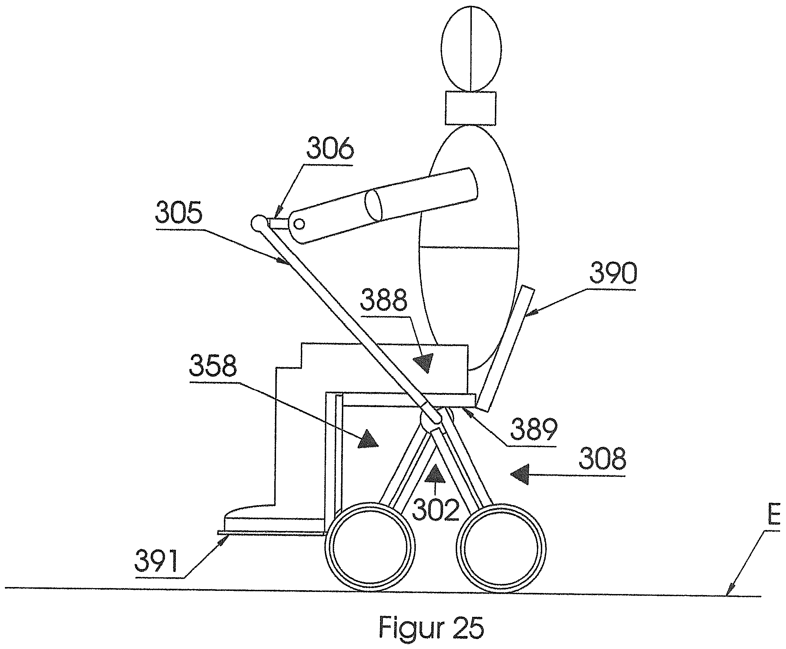

In der Figur 25 ist das Fahrzeug 300 im ersten und/oder dritten Betriebsmodus mit einem sitzend fahrenden Benutzer in einer erhöhten Sitzposition dargestellt. Die Höhenanpassung der Sitzposition kann vorteilhaft in vielen Situationen vorgenommen werden. Beispielsweise ist eine niedrige Sitzposition bei höheren Geschwindigkeiten für den Benutzer angenehmer, während an der Kasse im Supermarkt oder in einem Restaurant die erhöhte Sitzposition von Vorteil ist.

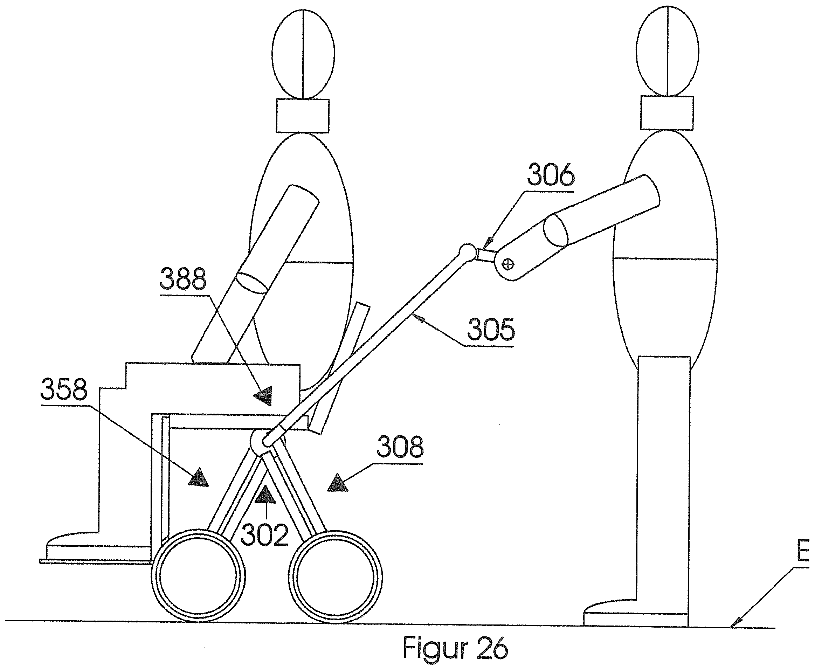

In der Figur 26 befindet sich das Fahrzeug 300 in dem vorwählbaren zweiten Betriebsmodus mit einer sitzenden Person und einer dahinter gehenden Person, die das Fahrzeug 300 entweder lenkt, während das Fahrzeug 300 angetrieben ist, oder schiebt, während es sich im Freilauf befindet. Das Fahrzeug 300 ist auch im Freilauf benutzbar. Ebenso kann auch mindestens ein Trittbrett am Fahrzeug 300 angebracht sein. Die Position der Lenkstange 305 wurde derart in die zum Schieben vorgesehene Position verändert, dass sich mindestens zwei Fahrzeugkomponenten und/oder Teile / Unterkomponenten davon in einer gegenüber dem ersten Betriebsmodus anderen Position zueinander befinden.

Das Fahrzeug 300 kann ebenso über eine/mehrere Mechanik/en und/oder einen/mehrere Antrieb/e verfügen, wodurch der Übergang von einem Betriebsmodus in einen anderen Betriebsmodus und/oder einem Betriebsmodus in den Pack-Modus und/oder umgekehrt und/oder die Änderung der Sitzhöhe und/oder Fahrzeughöhe und/oder Fahrzeuglänge und/oder Fahrzeugbreite automatisch und/oder ferngesteuert ermöglicht wird. Wobei auch eine autonome Steuerung möglich ist.

Im Pack-Modus wird das Fahrzeug 300 zusammengeklappt, wodurch eine kompakte Bauform entsteht, die es ermöglicht das Fahrzeug in einem Treppenhaus oder Flur einer Wohnung abzustellen oder in einem Kofferraum eines Pkw zu verstauen.

Auch in der vierten Ausführungsform kann die Möglichkeit bestehen, zum Transport einzelne Bauteile abzunehmen. Mindestens ein zusätzlicher Ständer kann dabei eine stabile Standposition unterstützen.

Das Fahrzeug 300 kann auch für den Transport über mindestens eine Aufnahmemöglichkeit zur Befestigung an einer Anhängerkupplung eines Automobils verfügen.

Die in den Figuren 1 -13, den Figuren 14 - 19, 20, 21 - 22, sowie den Figuren 23 - 26 dargestellten und zuvor beschriebenen Ausführungen stellen nur vier der vielen möglichen Ausführungen des erfindungsgemäßen Fahrzeugs dar. Die Möglichkeiten der Ausgestaltungen sind so umfangreich, dass sie hier nicht alle dargestellt werden können.

Als Teil der weiteren möglichen Ausgestaltungen sind nachfolgend verschiedene Aufhängungen der Fahrzeugkomponenten und Fahrzeugteile beschrieben, mit denen das erfindungsgemäße Fahrzeug ebenfalls konzipiert bzw. ausgestattet sein kann.

Darüber hinaus sind auch Sonderformen und abstrakte Konstruktionen in den Ausführungen und Drehpunktlagerungen der Fahrzeugkomponenten und/oder jeweiliger Teile / Unterkomponenten davon als Fahrzeug möglich.

Die Ausführungen basieren erfindungsgemäß allesamt auf den maßgeblichen Grundeigenschaften von mindestens zwei vorwählbaren Betriebsmodi, nämlich zum Mitfahren und Schieben, wobei mindestens im ersten Betriebsmodus mindestens ein/e Benutzer/in oder eine Automatik mindestens die zweite und/oder dritte Fahrzeugkomponente und/oder Teile / Unterkomponenten davon direkt oder indirekt zumindest teilweise vertikal um mindestens eine Drehachse an der ersten Fahrzeugkomponente bewegen kann, wodurch sich mindestens die Fahrzeuglage oder Fahrzeuglänge oder Fahrzeugbreite oder Fahrzeughöhe oder Sitzhöhe verändert und sich mindestens im zweiten Betriebsmodus zum Schieben voreingestellt mindestens zwei Fahrzeugkomponenten und/oder Teile / Unterkomponenten davon in einer gegenüber dem ersten Betriebsmodus anderen Position zueinander befinden, nach Anspruch 1.

Der Patent-Schutzumfang bezieht sich auf alle möglichen konstruktiven Ausführungen eines Fahrzeugs, das die Merkmale nach Patentanspruch 1 aufweist.

Aufhängungen der Fahrzeugkomponenten und Fahrzeugteile des Fahrzeugs

- Aufhängung der Fahrzeugkomponenten in der Art, dass mindestens eine Fahrzeugkomponente, welche sich links der Fahrzeuglängsachse befindet und mindestens eine Fahrzeugkomponente, welche sich rechts der Fahrzeuglängsachse befindet und/oder jeweils Teile / Unterkomponenten davon abhängig oder unabhängig voneinander direkt oder indirekt bewegbar an mindestens einer Drehachse an der ersten Fahrzeugkomponente aufgehängt sind, sodass durch mindestens einen/eine Benutzer/in oder eine Automatik in mindestens einem Betriebsmodus das Fahrzeug seitlich geneigt werden kann, wodurch sich mindestens die Fahrzeuglage oder Fahrzeuglänge oder Fahrzeugbreite oder Fahrzeughöhe oder Sitzhöhe verändert.

- Aufhängung der Fahrzeugkomponenten oder Räder in der Art, dass mindestens ein Rad oder eine Fahrzeugkomponente, welche sich links der Fahrzeuglängsachse befindet und mindestens ein Rad oder eine Fahrzeugkomponente, welche sich rechts der Fahrzeuglängsachse befindet und/oder jeweils Teile / Unterkomponenten davon miteinander verbunden an mindestens einer gemeinsamen Drehachse an mindestens der ersten Fahrzeugkomponente oder der Lenksäule dreh- und/oder schwenkbar aufgehängt sind, wodurch das Fahrzeug gelenkt werden kann.

- Aufhängung der Fahrzeugkomponenten in der Art, dass mindestens eine Fahrzeugkomponente, welche sich links der Fahrzeuglängsachse befindet und mindestens eine Fahrzeugkomponente, welche sich rechts der Fahrzeuglängsachse befindet, und/oder jeweils Teile / Unterkomponenten davon, über einen/ein/eine oder mehrere Drehpunkt/e und/oder Gelenk/e und/oder Gelenkstange/n und/oder Übersetzung/en miteinander verbunden an mindestens einer Drehachse an mindestens der ersten Fahrzeugkomponente aufgehängt sind, sodass die mindestens zwei Fahrzeugkomponenten und/oder jeweils Teile / Unterkomponenten davon durch mindestens einen/eine Benutzer/in oder eine Automatik in mindestens einem Betriebsmodus mindestens in Kurven- und seitlichen Hanglagen sowie in Schräglagen z. B. an versetzten Ebenen einzeln oder im Hub einseitig oder beidseitig gleich oder ungleich zumindest teilweise vertikal direkt oder indirekt in die gleiche Richtung oder verschiedene Richtungen bewegt werden können, wodurch sich mindestens die Fahrzeuglage oder Fahrzeuglänge oder Fahrzeugbreite oder Fahrzeughöhe oder Sitzhöhe verändert.

- Aufhängung von lenkbaren Rädern in der Art, dass mindestens eine Fahrzeugkomponente über mindestens ein lenkbares Rad verfügt, welches in mindestens einer Achsaufnahme drehbar und/oder schwenkbar gelagert ist.

- Aufhängung der Fahrzeugkomponenten in der Art, dass mindestens die zweite und/oder dritte Fahrzeugkomponente und/oder jeweils Teile / Unterkomponenten davon an mindestens einer Drehachse an mindestens der ersten Fahrzeugkomponente gelagert ist/sind und/oder über weitere Lagerpunkte mindestens im zweiten Betriebsmodus mindestens zwei Fahrzeugkomponenten und/oder jeweils Teile / Unterkomponenten davon in eine gegenüber dem ersten Betriebsmodus andere Position zueinander gebracht werden.

- Aufhängung von Stehflächen in der Art, dass mindestens eine Stehfläche beweglich an mindestens einer Fahrzeugkomponente angebracht ist, in dem die Stehfläche/n an zusätzlichen Gelenken aufgehängt ist/sind, wodurch in mindestens einem Betriebsmodus mindestens in seitlichen Hanglagen sowie in Schräglagen z.B. an versetzten Ebenen und Kurven durch den/die mindestens einen/eine Benutzer/in oder eine Automatik die Standfläche/n für einen Neigungsausgleich der Schräglage seitlich geneigt werden kann/können, unabhängig von einer Bewegung der entsprechenden Fahrzeugkomponente.

- Aufhängung von Fahrzeugteilen in der Art, dass die zweite und die dritte Fahrzeugkomponente und/oder auch weitere Fahrzeugkomponenten aus jeweils mindestens zwei Teilen bestehen, die durch mindestens ein Gelenk verbunden sind, wobei in einem zusätzlichen Pack-Modus die jeweils mindestens zwei Teile jeweils um das/die entsprechende/n Gelenk/e gedreht und/oder geschwenkt werden können.

- Aufhängung von Fahrzeugteilen in der Art, dass mindestens ein Stützrad und/oder mindestens ein Ständer über mindestens einen Lagerpunkt drehbar und/oder schwenkbar an mindestens einer Fahrzeugkomponente gelagert ist/sind.

- Aufhängung von Fahrzeugteilen in der Art, dass die erste Fahrzeugkomponente über eine höhenverstellbare Aufnahme für mindestens die zweite und dritte Fahrzeugkomponente verfügt und/oder die mindestens zweite und dritte Fahrzeugkomponente über Gelenke und/oder mindestens eine/einen Mechanik und/oder Antrieb ausgestattet die Steigung sowie das Gefälle bei Bergauf- und Bergabfahrt durch mindestens einen/eine Benutzer/in oder eine Automatik in der Stand- und/oder Sitzfläche ausgleichen kann/können.

- Aufhängung von Fahrzeugteilen in der Art, dass mindestens ein Fahrzeugsitz an mindestens der ersten Fahrzeugkomponente über ein/mehrere Gelenk/e derart gelagert ist und/oder mehrere Fahrzeugkomponenten drehbar und/oder schwenkbar an mindestens der ersten Fahrzeugkomponente gelagert sind und/oder das Fahrzeug über mindestens eine/einen Mechanik und/oder Antrieb verfügt, wodurch mindestens ein/eine Benutzer/in oder eine Automatik die Sitzhöhe und/oder Fahrzeughöhe in mindestens einem Betriebsmodus verändern kann.

- Aufhängung von Fahrzeugteilen in der Art, dass mindestens eine Lenkstange an mindestens der ersten Fahrzeugkomponente über mindestens ein Gelenk drehbar und/oder schwenkbar gelagert ist, wodurch die Position der Lenkstange, abhängig und unabhängig von einer Bewegung der ersten Fahrzeugkomponente, verändert werden kann.

- Aufhängung von Fahrzeugteilen in der Art, dass die Vorderachse und/oder Lenkstange in der Aufhängung / Befestigung an mindestens der ersten Fahrzeugkomponente starr erfolgt und die Lenkbewegung über mindestens eine/einen Mechanik und/oder Antrieb elektrisch gesteuert erfolgt.


**Patentansprüche**

1. Fahrzeug (1, 100, 200, 300), mit

einer ersten Fahrzeugkomponente (2, 102, 202, 302), an der über mindestens ein Gelenk mindestens eine Lenkstange (5, 105, 205, 305) drehbar und schwenkbar gehalten ist, wodurch die Position der Lenkstange (5, 105, 205, 305) unabhängig von einer Bewegung der ersten Fahrzeugkomponente (2, 102, 202, 302) veränderbar ist und die Lenkung durch Drehen der Lenkstange (5, 105, 205, 305) direkt oder indirekt erfolgt,
mindestens einem lenkbaren Rad (3, 103, 203, 303),
mindestens einer zweiten und einer dritten Fahrzeugkomponente (8, 9, 108, 109, 208, 209, 308, 309), wobei mindestens die zweite und die dritte Fahrzeugkomponente (8, 9, 108, 109, 208, 209, 308, 309), die jeweils über mindestens ein Rad (3, 18, 19, 103, 118, 119, 203, 218, 219, 303, 318, 319) verfügen, sich links und rechts der Fahrzeuglängsachse befinden,
mindestens zwei Betriebsmodi, in denen das Fahrzeug (1, 100, 200, 300) jeweils auf den mindestens drei Rädern (3, 18, 19, 103, 118, 119, 203, 218, 219, 303, 318, 319) bewegt wird, wobei in jedem der mindestens zwei Betriebsmodi mindestens eine Person und/oder Material befördert werden kann und/oder eine Golftasche sowie Geräte / Maschinen als Zusatzausstattung benutzbar ist/sind, welches/welche auch während dem Betriebsmodus-Wechsel am Fahrzeug verbleiben kann, nämlich
einem ersten vorwählbaren Betriebsmodus zum Mitfahren, in dem mindestens ein/e Benutzer/in auf mindestens einer Fläche stehen und/oder sitzen kann, wobei mindestens eines der Räder (3, 18, 19, 103, 118, 119, 203, 218, 219, 303, 318, 319) am Fahrzeug (1, 100, 200, 300) zumindest zeitweise angetrieben ist und in dem mindestens ein/e Benutzer/in oder eine Automatik mindestens die zweite und/oder die dritte Fahrzeugkomponente (8, 9, 108, 109, 208, 209, 308, 309) und/oder Teile / Unterkomponenten davon direkt oder indirekt zumindest teilweise vertikal um mindestens eine Drehachse an der ersten Fahrzeugkomponente (2, 102, 202, 302) bewegen kann, wodurch das Fahrzeug seitlich geneigt wird und sich mindestens die Fahrzeuglage verändert, dabei ist seitlich an einem Hang sowie in Schräglagen z.B. an versetzten Ebenen Geradeausfahren möglich,
sowie
einem zweiten vorwählbaren Betriebsmodus zum Schieben, in dem die Lenkstange (5, 105, 205, 305) eine geneigte Position in eine Richtung einnimmt, welche der Fahrtrichtung im ersten Betriebsmodus entgegengesetzt entspricht, sich mindestens zwei Fahrzeugkomponenten (2, 8, 9, 102, 108, 109, 130, 202, 208, 209, 258, 259, 302, 308, 309, 358, 359, 388) und/oder Teile / Unterkomponenten davon voreingestellt in einer gegenüber mindestens dem ersten Betriebsmodus anderen Position zueinander befinden, sowie sich voreingestellt die Fahrzeuglänge und/oder Fahrzeugbreite und/oder Fahrzeughöhe gegenüber dem ersten Betriebsmodus zum Mitfahren ändert und, in dem der/die mindestens eine Benutzer/in hinter oder neben dem Fahrzeug (1, 100, 200, 300) geht und es entweder lenkt, während es angetrieben selbst fährt, oder schiebt, während es sich im Freilauf befindet.

2. Fahrzeug (1, 100, 200, 300) nach Anspruch 1, **dadurch gekennzeichnet, dass**
mindestens im ersten Betriebsmodus die durch mindestens einen/eine Benutzer/in oder eine Automatik entstandene/n Bewegung/en mindestens der zweiten und/oder dritten Fahrzeugkomponente (8, 9, 108, 109, 208, 209, 308, 309) und/oder jeweiliger Teile / Unterkomponenten davon einzeln oder im Hub einseitig oder beidseitig gleich oder ungleich zumindest teilweise vertikal direkt oder indirekt um mindestens eine Drehachse an der ersten Fahrzeugkomponente (2, 102, 202, 302) in eine Richtung oder verschiedene Richtungen erfolgt.

3. Fahrzeug (1, 100, 200, 300) nach den Ansprüchen 1 oder 2, **dadurch**

   **gekennzeichnet,
   dass**

   die Aufhängung mindestens der zweiten und dritten Fahrzeugkomponente (8, 9, 108, 109, 208, 209, 308, 309) und/oder jeweiliger Teile / Unterkomponenten davon an mindestens einer Drehachse der ersten Fahrzeugkomponente (2, 102, 202, 302) abhängig und/oder unabhängig voneinander erfolgt.

4. Fahrzeug (1, 100, 200, 300) nach einem der vorhergehenden Ansprüche, **gekennzeichnet durch** einen dritten vorwählbaren Betriebsmodus, in dem mindestens ein/e Benutzer/in auf mindestens einer Fläche stehen und/oder sitzen kann, wobei mindestens eines der Räder (3, 18, 19, 103, 118, 119, 203, 218, 219, 303, 318, 319) am Fahrzeug (1, 100, 200, 300) zumindest zeitweise angetrieben ist und in dem mindestens die zweite und die dritte Fahrzeugkomponente (8, 9, 108, 109, 208, 209, 308, 309) und/oder jeweilige Teile / Unterkomponenten davon zur ersten Fahrzeugkomponente (2, 102, 202, 302) arretiert sind.

5. Fahrzeug (1, 100, 200, 300) nach einem der vorhergehenden Ansprüche, **dadurch gekennzeichnet, dass** an der ersten Fahrzeugkomponente (2, 102, 202, 302) das mindestens eine lenkbare Rad (3, 103, 203, 303) an mindestens einer Halterung angeordnet ist, die in mindestens einer Achsaufnahme drehbar und/oder schwenkbar gelagert ist.

6. Fahrzeug (1, 100, 200, 300) nach einem der vorhergehenden Ansprüche, **dadurch gekennzeichnet, dass** das mindestens eine lenkbare Rad (3, 18, 19, 103, 118, 119, 203, 218, 219, 303, 318, 319) am Fahrzeug (1, 100, 200, 300) über mindestens einen Motor (20, 21, 120, 220, 221, 320, 321) verfügt, der elektrisch gesteuert durch mindestens einen Benutzer oder eine Automatik das Fahrzeug (1, 100, 200, 300) lenken kann und/oder die Lenkung über eine/mehrere Mechanik/en und/oder einen/mehrere Antrieb/e indirekt mit Hilfe von Steuerelektronik erfolgt, wobei durch ein Drehen und/oder Schwenken der Lenkstange (5, 105, 205, 305) und/oder mindestens einer Achse und/oder mindestens einem Rad (3, 18, 19, 103, 118, 119, 203, 218, 219, 303, 318, 319), welches auch über mindestens einen Motor (20, 21, 120, 220, 221, 320, 321) verfügen kann, elektrisch gesteuert die Lenkbewegung ausgeführt wird.

7. Fahrzeug (1, 100, 200, 300) nach einem der vorhergehenden Ansprüche, **dadurch gekennzeichnet, dass** mindestens im ersten Betriebsmodus mindestens ein/e Benutzer/in oder eine Automatik mindestens in Kurven- und seitlichen Hanglagen sowie in Schräglagen z. B. an versetzten Ebenen jeweils mindestens einzeln und/oder pro Seite die hangaufwärts und hangabwärts oder kurveninnenseitig und kurvenaußenseitig gelegene/n mindestens zweite und dritte Fahrzeugkomponente/n (8, 9, 108, 109, 208, 209, 308, 309) und/oder Stehfläche/n zumindest teilweise vertikal um mindestens eine Drehachse an der ersten Fahrzeugkomponente (2, 102, 202, 302) bewegen kann, wodurch in bevorzugter Weise ein Neigungsausgleich der Schräglage an der/den Stehfläche/n ausführbar ist, unabhängig von einer Bewegung der entsprechenden Fahrzeugkomponente (8, 9, 108, 109, 130, 208, 209, 258, 259, 308, 309, 358, 359, 388).

8. Fahrzeug (1, 100, 200, 300) nach einem der vorhergehenden Ansprüche, **dadurch gekennzeichnet, dass** die zweite und die dritte Fahrzeugkomponente (8, 9, 108, 109, 208, 209, 308, 309) und/oder auch weitere Fahrzeugkomponenten (130, 258, 259, 358, 359, 388) jeweils aus mindestens zwei Teilen bestehen, die durch mindestens ein Gelenk (14, 15, 114, 115, 140, 214, 215, 264, 265) verbunden sind, wobei in einem zusätzlichen Pack-Modus die mindestens zwei Teile jeweils um das/die entsprechende/n Gelenk/e (14, 15, 114, 115,140, 214, 215, 264, 265) geschwenkt und/oder gedreht werden und/oder zum Transport zumindest ein Teil der Räder (3, 18, 19, 103, 118, 119, 203, 218, 219, 303, 318, 319) und/oder andere Bauteile abnehmbar sind.

9. Fahrzeug (1, 100, 200, 300) nach einem der vorhergehenden Ansprüche, **dadurch gekennzeichnet, dass** es über mindestens eine Aufnahme (7a, 7b, 107, 207) oder Aufnahmemöglichkeit zur Befestigung von zusätzlich einer/einem oder mehrerer/mehreren Sitzfläche/n oder Golftasche/n oder Transportbehälter/n oder Werkzeug/en oder Leiter/n oder Vorrichtung/en oder Baugerät/en oder Mähgerät/en oder anderen Gerät/en und/oder Waffeln verfügt, wobei auch Kombinationen mit mehreren der Aufnahmen (7a, 7b, 107, 207) oder Aufnahmemöglichkeiten zur Befestigung verschiedener der vorgenannten Gegenstände in dem Fahrzeug (1, 100, 200, 300) möglich sind.

10. Fahrzeug (1, 100, 200, 300) nach einem der vorhergehenden Ansprüche, **dadurch gekennzeichnet, dass**

das Fahrzeug (1, 100, 200, 300) mit Pedalen ausgestattet ist, um zumindest zeitweise einen fahrradähnlichen Antrieb zur Fortbewegung zu ermöglichen und /oder zumindest zeitweise durch einen oder mehrere Motoren (20, 21, 120, 220, 221, 320, 321) angetrieben wird, welcher/welche auch zur Rekuperation genutzt werden können.

11. Fahrzeug (1, 100, 200, 300) nach einem der vorhergehenden Ansprüche, **dadurch gekennzeichnet, dass**

das Fahrzeug (1, 100, 200, 300) auch ohne Körperkontakt und/oder Kontakt-Regelung und/oder Lenker (6, 106, 206, 306) mit mindestens einer Fernbedienung und/oder mindestens einer autonomen Steuerung steuerbar ist.

12. Fahrzeug (1, 100, 200, 300) nach einem der vorhergehenden Ansprüche, **dadurch gekennzeichnet, dass**

das Fahrzeug (1, 100, 200, 300) über eine/mehrere Mechanik/en und/oder einen/mehrere Antrieb/e verfügt, wodurch der Übergang von dem Pack-Modus in einen Betriebsmodus und/oder umgekehrt und/oder von einem Betriebsmodus in einen anderen Betriebsmodus und/oder die Änderung der Sitzhöhe und/oder Fahrzeughöhe und/oder Fahrzeuglänge und/oder Fahrzeugbreite automatisch und/oder ferngesteuert ermöglicht wird und/oder durch die Mechanik/en und/oder den/die Antrieb/e mit Unterstützung von Steuerelektronik sowie zusätzlichen Neigungssensoren, die Neigungsanpassung von Fahrzeugkomponenten (2, 8, 9, 102, 108, 109, 130, 202, 208, 209, 258, 259, 302, 308, 309, 358, 359, 388) und/oder Teilen / Unterkomponenten davon an die Steigung bzw. das Gefälle mindestens bei Bergauf- / Bergabfahrt und/oder in seitlichen Hanglagen sowie in Schräglagen z. B. an versetzten Ebenen und/oder in Kurven automatisch und/oder ferngesteuert erfolgt.

13. Fahrzeug (1, 100, 200, 300) nach einem der vorhergehenden Ansprüche, **dadurch gekennzeichnet, dass**

das Fahrzeug (1, 100, 200, 300) für den Transport über mindestens eine Aufnahme oder Aufnahmemöglichkeit zur Befestigung an einer Anhängerkupplung eines Automobils verfügt.

14. Fahrzeug (1, 100, 200, 300) nach einem der vorhergehenden Ansprüche, **dadurch gekennzeichnet, dass**

das Fahrzeug (1, 100, 200, 300) als Zugfahrzeug verwendet werden kann und über eine/mehrere Anhänge-Vorrichtung/en zum Anhängen von Anhängern verfügt.

15. Verwendung des Fahrzeugs (1, 100, 200, 300) nach einem der vorhergehenden Ansprüche, als Golftaschenwagen, Freizeitfahrzeug, Einkaufsfahrzeug, Transportfahrzeug, Industriefahrzeug, Baustellenfahrzeug, Seniorenfahrzeug, Behindertenfahrzeug, Kinderwagen, Explorationsfahrzeug, Gartengerät / Mähfahrzeug, Landwirtschaftsfahrzeug oder Militärfahrzeug, wobei auch Kombinationen von mehreren der vorgenannten Verwendungen in dem Fahrzeug (1, 100, 200, 300) möglich sind..

## Claims

1. Vehicle (1, 100, 200, 300), with

a first vehicle component (2, 102, 202, 302) on which at least one steering rod (5, 105, 205, 305) is held rotatably and pivotably via at least one joint, whereby the position of the steering rod (5, 105, 205, 305) can be changed independently of a movement of the first vehicle component (2, 102, 202, 302) and the steering is carried out directly or indirectly by turning the steering rod (5, 105, 205, 305)
at least one steerable wheel (3, 103, 203, 303),
at least a second and a third vehicle component (8, 9, 108, 109, 208, 209, 308, 309), wherein at least the second and the third vehicle component (8, 9, 108, 109, 208, 209, 308, 309), which are respectively provided with at least one wheel (3, 18, 19, 103, 118, 119, 203, 218, 219, 303, 318, 319), are positioned on the left and right side of the vehicle longitudinal axis,
at least two operating modes in which the vehicle (1, 100, 200, 300) can be moved respectively on the at least three wheels (3, 18, 19, 103, 118, 119, 203, 218, 219, 303, 318, 319) wherein at least one person and/or material can be transported in each of the two operating modes and/or a golf bag as well as auxiliary equipment / machines can be used which can also remain on the vehicle during a change of the operating mode, namely
a first pre-selectable operating mode for riding along, in which at least one male/female user can stand and/or sit on at least one surface, wherein at least one of the wheels (3, 18, 19, 103, 118, 119, 203, 218, 219, 303, 318, 319) on the vehicle is driven at least some of the time, and in which at least one male/female user or an automatic can move at least the second and/or third vehicle component (8, 9, 108, 109, 208, 209, 308, 309) and/or parts/sub-components thereof, directly or indirectly, at least in part vertically, around at least one rotational axis at the first vehicle component (2, 102, 202, 302), thereby the vehicle tilts sideways and at least the vehicle position changes, meanwhile a straight-line drive is possible at least lateral on a slope as well as in inclined positions, e.g. at offset planes, as well as

a second pre-selectable operating mode for pushing, in which the steering rod (5, 105, 205, 305) assumes an inclined position in a direction opposite to the direction of driving in the first operating mode, at least two vehicle components (2, 8, 9, 102, 108, 109, 130, 202, 208, 209, 258, 259, 302, 308, 309, 358, 359, 388) and/or parts/sub-components thereof are located in a preset position, relative to each other, different as compared to the position in at least the first operating mode, as well as the vehicle length and/or vehicle width and /or vehicle height presetly change compared to the first operating mode for driving along and, in which the at least one male/female user walks behind or beside the vehicle (1, 100, 200, 300) and either steers it while it moves automatically driven, or pushes it while it is in neutral gear.

2. Vehicle (1, 100, 200, 300) according to claim 1, **characterized in that**
at least in the first operating mode, the movement(s), generated by at least one male/female user or an automatic, of at least the second and/or third vehicle component (8, 9, 108, 109, 208, 209, 308, 309) and/or respective parts/sub-components thereof, take place individually or in the form of a lifting movement one-sided or both-sided evenly or unevenly, at least partially vertically, directly or indirectly around at least one rotational axis at the first vehicle component (2, 102, 202, 302) in one direction or in different directions.

3. Vehicle (1, 100, 200, 300) according to claim 1 or 2, **characterized in that**
the suspension of at least the second and third vehicle component (8, 9, 108, 109, 208, 209, 308, 309) and/or respective parts/sub-components thereof takes place at at least one rotational axis of the first vehicle component (2, 102, 202, 302), dependent and/or independent of each other.

4. Vehicle (1, 100, 200, 300) according to one of the preceding claims, **characterized by** a third pre-selectable operating mode in which at least one male/female user can stand and/or sit on at least one surface, wherein at least one of the wheels (3, 18, 19, 103, 118, 119, 203, 218, 219, 303, 318, 319) on the vehicle (1, 100, 200, 300) is driven at least at times and in which at least the second and the third vehicle component (8, 9, 108, 109, 208, 209, 308, 309) and/or respective parts/sub-components thereof are locked to the first vehicle component (2, 102, 202, 302).

5. Vehicle (1, 100, 200, 300) according to one of the preceding claims, **characterized in that** on the first vehicle component (2, 102, 202, 302) the at least one steerable wheel (3, 103, 203, 303) is arranged on at least one mounting which is mounted rotating and/or pivoting in at least one axle receptacle.

6. Vehicle (1, 100, 200, 300) according to one of the preceding claims, **characterized in that** the at least one steerable wheel (3, 18, 19, 103, 118, 119, 203, 218, 219, 303, 318, 319) on the vehicle (1, 100, 200, 300) comprises at least one motor (20, 21, 120, 220, 221, 320, 321), which can steer the vehicle (1, 100, 200, 300) electrically controlled by at least one user or an automatic, and/or that the steering takes place via one/several mechanical device(s) and/or one/several drive(s) indirectly with the aid of control electronic, wherein the steering movement is realized electrically controlled through rotating and/or pivoting of the steering column (5, 105, 205, 305), and/or at least one axle, and/or at least one wheel (3, 18, 19, 103, 118, 119, 203, 218, 219, 303, 318, 319) which can also be provided with at least one motor (20, 21, 120, 220, 221, 320, 321).

7. Vehicle (1, 100, 200, 300) according to one of the preceding claims, **characterized in that** at least in the first operating mode, at least one male/female user or an automatic can at least in curves and on side slopes as well as in inclines, e.g. at offset planes, move respectively at least individually and/or on each side the at least second and third vehicle component(s) (8, 9, 108, 109, 208, 209, 308, 309) and/or standing surface(s) which is/are positioned uphill and downhill or on the curve inside and outside, at least partially vertically around at least one rotational axis on the first vehicle component (2, 102, 202, 302), whereby a tilt compensation of the inclination in the position of the standing surface(s) can be carried out in a preferred manner, independently of a movement of the corresponding vehicle component (8, 9, 108, 109, 130, 208, 209, 258, 259, 308, 309, 358, 359, 388).

8. Vehicle (1, 100, 200, 300) according to one of the preceding claims, **characterized in that** the second and third vehicle component (8, 9, 108, 109, 208, 209, 308, 309) and/or also additional vehicle components (130, 258, 259, 358, 359, 388) are respectively composed of at least two parts which are connected by at least one joint (14, 15, 114, 115, 140, 214, 215, 264, 265), wherein in an additional pack mode, the at least two parts are respectively pivoted and/or rotated around the corresponding joint(s) (14, 15, 114, 115, 140, 214, 215, 264, 265) and/or for transport, at least some of the wheels (3, 18, 19, 103, 118, 119, 203, 218, 219, 303, 318, 319) and/or other components are arranged so as to be removable.

9. Vehicle (1, 100, 200, 300) according to one of the preceding claims, **characterized in that** it comprises at least one holding fixture (7a, 7b, 107, 207) or holding option for attaching additionally one/several seating surface(s) or golf bag(s) or transport container(s) or tool(s) or ladder(s) or device(s) or construction equipment or mowing appliance(s) or other appliance(s) or weapon(s), whereby combinations with several of the recordings (7a, 7b, 107, 207) or recording options for attaching various of the aforementioned objects in the vehicle (1, 100, 200, 300) are also possible.

10. Vehicle (1, 100, 200, 300) according to one of the preceding claims, **characterized in that** the vehicle (1, 100, 200, 300) is provided with pedals to enable a bicycle-like drive at least temporarily and/or the vehicle (1, 100, 200, 300) is driven at least temporarily by one or several motors (20, 21, 120, 220, 221, 320, 321) which can also be used for recuperation.

11. Vehicle (1, 100, 200, 300) according to one of the preceding claims, **characterized in that** the vehicle (1, 100, 200, 300) is also be controllable without body contact and/or contact control and/or handlebar (6, 106, 206, 306) with the aid of at least one remote control and/or at least one autonomous control.

12. Vehicle (1, 100, 200, 300) according to one of the preceding claims, **characterized in that** the vehicle (1, 100, 200, 300) is provided with one/several mechanical device(s) and/or one/several drive(s), thus making possible the transition from the pack mode to an operating mode, and/or vice versa, and/or from an operating mode to a different operating mode, and/or the change of the seat height, and/or the vehicle height, and/or the vehicle length, and/or the vehicle width, either automatically and/or with remote control, and/or that with the aid of these mechanical device(s) and/or the drive(s), supported by control electronic and additional tilt sensors, the tilt adaption of vehicle components (2, 8, 9, 102, 108, 109, 130, 202, 208, 209, 258, 259, 302, 308, 309, 358, 359, 388) and/or parts/sub-components thereof, to the ascent respectively the descent, at least during uphill/downhill drives and/or on side slopes as well as in inclines, e.g. at offset planes and/or in curves, takes place automatically and/ or remote controlled.

13. Vehicle (1, 100, 200, 300) according to one of the preceding claims, **characterized in that** the vehicle (1, 100, 200, 300) is provided with at least one holder or holding option for attaching it at a trailer hitch of an automobile for transport.

14. Vehicle (1, 100, 200, 300) according to one of the preceding claims, **characterized in that** the vehicle (1, 100, 200, 300) can be used as towing vehicle and is equipped with one/several towing devices(s) for attaching trailers.

15. Use of the vehicle (1, 100, 200, 300) according one of the preceding claims, as a golf vehicle, a recreational vehicle, a shopping vehicle, a transport vehicle, an industrial vehicle, a construction site vehicle, a vehicle for transporting seniors or handicapped persons, as a child carriage, an exploration vehicle, a gardening apparatus/mowing vehicle, an agricultural vehicle or a military vehicle, whereby combinations of several of the aforementioned uses in the vehicle (1, 100, 200, 300) are also possible.

**Revendications**

1. Véhicule (1, 100, 200, 300), avec

un premier composant de véhicule (2, 102, 202, 302) sur lequel au moins une barre de direction (5, 105, 205, 305) est maintenue de manière rotative et pivotante par l'intermédiaire d'au moins une articulation, ce qui permet de modifier la position de la barre de direction (5, 105, 205, 305) indépendamment d'un mouvement du premier composant de véhicule (2, 102, 202, 302) et sur lequel la direction directement ou indirectement en tournant la barre de direction (5, 105, 205, 305),
au moins une roue directrice (3, 103, 203, 303), au moins un deuxième et un troisième composant du véhicule (8, 9, 108, 109, 208, 209, 308, 309), dans lequel au moins le deuxième et le troisième composant du véhicule (8, 9, 108, 109, 208, 209, 308, 309), disposant chacun d'au moins une roue (3, 18, 19, 103, 118, 119, 203, 218, 219, 303, 318, 319), sont situés à gauche et à droite de l'axe longitudinal du véhicule, au moins deux modes de fonctionnement dans lesquels le véhicule (1, 100, 200, 300) est déplacé respectivement sur les au moins trois roues (3, 18, 19, 103, 118, 119, 203, 218, 219, 303, 318, 319), où au moins une personne et/ou du matériel peuvent être transporté(e) dans chacun des au moins deux modes de fonctionnement et/ou un sac de golf ainsi que des appareils / machines peuvent être utilisés comme équipement supplémentaire, lequel pouvant également rester sur le véhicule pendant le changement de mode de fonctionnement, à savoir un premier mode de fonctionnement pré-sélectionnable pour la conduite, dans lequel au moins un(e) utilisateur(trice) peut se tenir debout et/ou s'asseoir sur au moins une surface, lequel au moins une de roues (3, 18, 19, 103, 118, 119, 203, 218, 219, 303, 318, 319) sur le véhicule (1, 100, 200, 300) étant entraînée au moins temporairement et dans lequel au moins un(e) utilisateur(trice) ou un système automatique peut déplacer au moins le deuxième et/ou le troisième composant du véhicule (8, 9, 108, 109, 208, 209, 308, 309) et/ou des parties / sous-composants de ceux-ci directement ou indirectement au moins en partiellement verticalement autour d'au moins un axe de rotation du premier composant du véhicule (2, 102, 202, 302), ce qui fait que le véhicule est incline latéralement et qu'au moins la position du véhicule change, en l'occurrence, latéralement sur une pente ainsi que dans des positions inclinées, par exemple sur des plans décalés, il est possible de rouler en ligne droite, ainsi que

un deuxième mode de fonctionnement pré-sélectionnable pour pousser, dans lequel la barre de direction (5, 105, 205, 305) prend une inclinée position dans une direction opposée de direction la marche dans le premier mode de fonctionnement, préréglés il y a au moins deux composants du véhicule (2, 8, 9, 102, 108, 109, 130, 202, 208, 209, 258, 259, 302, 308, 309, 358, 359, 388) et/ou des parties / sous-composants de ceux-ci se trouvent dans une position l' un par rapport à l' autre qui est au moins différente de la position dans le premier mode de fonctionnement, en que préréglés la longueur du véhicule et/ou la largeur du véhicule et/ou la hauteur du véhicule changent par rapport au premier mode de fonctionnement pour la conduit, et dans lequel le/la au moins un(e) utilisateur(trice) marche derrière ou à côté du véhicule (1, 100, 200, 300) et soit le dirige pendant 'il déplace lui-même conduite entraînée soit le pousse pendant qu'il est en roue libre.

2.  véhicule (1, 100, 200, 300) selon la revendication 1, **caractérisé en ce que**
au moins dans le premier mode de fonctionnement, le(s) mouvement(s) généré(s) par au moins un utilisateur ou un automatisme d'au moins le deuxième et/ou le troisième composant du véhicule (8, 9, 108, 109, 208, 209, 308, 309) et/ou des parties / sous-composants respectifs de celui-ci, individuellement ou en movement de levage d'un côté ou des deux côtés, de manière identique ou différente, s'effectue(nt) au moins partiellement verticalement, directement ou indirectement, autour d'au moins un axe de rotation sur le premier composant du véhicule (2, 102, 202, 302) dans une direction ou dans différentes directions.

3.  véhicule (1, 100, 200, 300) selon les revendications 1 ou 2, **caractérisé en ce que**,

la suspension d'au moins les deuxième et troisième composants du véhicule (8, 9, 108, 109, 208, 209, 308, 309) et/ou de parties / sous-composants respectifs de ceux-ci est effectuée sur au moins un axe de rotation du premier composant du véhicule (2, 102, 202, 302) de manière dépendante et/ou indépendante le uns des autres.

4.  véhicule (1, 100, 200, 300) selon l'une des revendications précédentes, **caractérisé par**
un troisième mode de fonctionnement présélectionnable dans lequel au moins un(e) utilisateur(trice) peut se tenir debout et/ou assis(e) sur au moins une surface, au moins une des roues étant (3, 18, 19, 103, 118, 119, 203, 218, 219, 303, 318, 319) du véhicule (1, 100, 200, 300) étant entraînée au moins temporairement et au moins les deuxième et troisième composants du véhicule (8, 9, 108, 109, 208, 209, 308, 309) et/ou des parties / sous-composants respectifs de ceux-ci verroullés vers premier composant du véhicule (2, 102, 202, 302).

5.  Véhicule (1, 100, 200, 300) selon l'une des revendications précédentes, **caractérisé en ce que**
sur le premier composant de véhicule (2, 102, 202, 302), l'au moins une roue orientable (3, 103, 203, 303) est disposée sur au moins un support qui est logé de manière rotative et/ou pivotante dans au moins un logement d'essieu.

6.  Véhicule (1, 100, 200, 300) selon l'une des revendications précédentes, **caractérisé en ce que**
que ladite l'au moins une roue orientable (3, 18, 19, 103, 118, 119, 203, 218, 219, 303, 318, 319) sur le véhicule (1, 100, 200, 300) dispose d'au moins un moteur (20, 21, 120, 220, 221, 320, 321) qui, commandé électriquement peut diriger le vehicule (1, 100, 200, 300) par au moins un utilisateur ou un automatisme, et/ou la direction est assurée par un/plusieurs mécanique(s) et/ou un/des entraînement(s) indirectement à l'aide d'une électronique de commande, le mouvement de direction étant execute par une rotation et/ou un pivotement du guidon (5, 105, 205, 305) et/ou d'au moins un essieu et/ou d'au moins une roue (3, 18, 19, 103, 118, 119, 203, 218, 219, 303, 318, 319), qui peut également disposer d'au moins un moteur (20, 21, 120, 220, 221, 320, 321), sous commande électrique.

7.  Véhicule (1, 100, 200, 300) selon l'une des revendications précédentes, **caractérisé en ce que**
au moins dans le premier mode de fonctionnement, au moins un(e) utilisateur(trice) ou un(e) système automatique, au moins dans les virages et dans les pentes latérales ainsi que dans les positions inclinées, par exemple sur des plans décalés, au moins individuellement et/ou par côté, l'au moins deuxième et troisième composant du véhicule (8, 9, 108, 109, 208, 209, 308, 309) et/ou la ou les surface(s) d'appui se trouve sur le côté de la pente en amont et en aval, ou le côté intérieur et extérieur du virage en cas de conduite en courbe au moins partiellement verticalement autour d'au moins un axe de rotation sur le premier composant (2, 102, 202, 302), peut se déplacer ce qui permet d'effectuer de préférence une compensation de l'inclinaison de la ou des surfaces verticales, indépendamment d'un mouvement du composant correspondant du véhicule (8, 9, 108, 109, 130, 208, 209, 258, 259, 308, 309, 358, 359, 388).

8. Véhicule (1, 100, 200, 300) selon l'une des revendications précédentes, **caractérisé en ce que** les deuxième et troisième composants du véhicule (8, 9, 108, 109, 208, 209, 308, 309) et/ou également d'autres composants du véhicule (130, 258, 259, 358, 359, 388) se composent chacun d'au moins deux parties qui sont reliées par au moins une articulation (14, 15, 114, 115, 140, 214, 215, 264, 265), dans lequel, dans un supplémentaire mode, à savoir le mode d'emballage, les au moins deux parties sont respectivement autour de la/des articulation(s) correspondante(s) (14, 15, 114, 115, 140, 214, 215, 264, 265) être pivotés et/ou tournés et/ou, pour le transport, au moins une partie des roues (3, 18, 19, 103, 118, 119, 203, 218, 219, 303, 318, 319) et/ou d'autres pièces/éléments sont amovibles.

9. Véhicule (1, 100, 200, 300) selon l'une des revendications précédentes, **caractérisé en ce que** il dispose d'au moins un logement (7a, 7b, 107, 207) ou d'une possibilité de logement pour fixer en plus un/un ou plusieurs/plusieurs siège(s) ou sac(s) de golf ou conteneur(s) de transport ou outil(s) ou échelle(s) ou dispositif(s) ou appareil(s) de construction ou appareil(s) de fauchage ou autre(s) appareil(s) et/ou arme(s), des combinaisons avec plusieurs des logements (7a, 7b, 107, 207) ou possibilités de logement pour fixer différents des objets précités dans le véhicule (1, 100, 200, 300) étant également possibles.

10. Véhicule (1, 100, 200, 300) selon l'une quelconque des revendications précédentes, **caractérisé en ce que** le véhicule (1, 100, 200, 300) est équipé de pédales afin de permettre, au moins temporairement, un entraînement semblable à celui d'une bicyclette pour se déplacer et/ou est entraîné, au moins temporairement, par un ou plusieurs moteurs (20, 21, 120, 220, 221, 320, 321) qui peuvent également être utilisés pour la recuperation.

11. Véhicule (1, 100, 200, 300) selon l'une des revendications précédentes, **caractérisé en ce que** le véhicule (1, 100, 200, 300) même sans contact corporel et/ou régulation de contact et/ou guidon (6, 106, 206, 306) avec au moins une télécommande et/ou au moins une commande autonome est contrôlable.

12. Véhicule (1, 100, 200, 300) selon l'une des revendications précédentes, **caractérisé en ce que** le véhicule (1, 100, 200, 300) dispose d'une/de plusieurs mécanique(s) et/ou d'un/de plusieurs entraînement(s), ce qui permet le passage du mode d'emballage à un mode de fonctionnement et/ou inversement et/ou d'un mode de fonctionnement à un autre mode de fonctionnement et/ou la modification de la hauteur d'assise et/ou de la hauteur du véhicule et/ou de la longueur du véhicule et/ou de la largeur du véhicule de manière automatique et/ou télécommandée et/ou par la/les mécanique(s) et/ou le/les entraînement(s) avec l'aide d'une électronique de commande ainsi que de capteurs d'inclinaison supplémentaires, l'adaptation de l'inclinaison des composants du véhicule (2, 8, 9, 102, 108, 109, 130, 202, 208, 209, 258, 259, 302, 308, 309, 358, 359, 388) et/ou de parties / sous-composants de ceux-ci à la pente ou à l'inclinaison à la pente, au moins en montée / en descente et/ou sur des pentes latérales ainsi que dans des positions inclinées, par exemple sur des plans décalés et/ou dans des virages, s'effectue automatiquement et/ou par commande à distance.

13. Véhicule (1, 100, 200, 300) selon l'une des revendications précédentes, **caractérisé en ce que** le véhicule (1, 100, 200, 300) dispose pour le transport d'au moins un logement ou d'une possibilité de logement pour la fixation à un attelage de remorque d'une automobile.

14. Véhicule (1, 100, 200, 300) selon l'une des revendications précédentes, **caractérisé en ce que** le véhicule (1, 100, 200, 300) peut être utilisé comme véhicule tracteur et dispose d'un/de plusieurs dispositif(s) d'attelage pour l'attelage de remorques.

15. Utilisation du véhicule (1, 100, 200, 300) selon l'une des revendications précédentes, en tant que chariot de golf, véhicule de loisirs, véhicule d'achat, véhicule de transport, véhicule industriel, véhicule de chantier, véhicule pour personnes âgées, véhicule pour personnes handicapées, poussette, véhicule d'exploration, outil de jardinage / véhicule de tonte, véhicule agricole ou véhicule militaire, des combinaisons de plusieurs des utilisations susmentionnées étant également possibles dans le véhicule (1, 100, 200, 300).

Figur 1

Figur 2

EP 3 737 605 B1

5

16   3   3   17

18   20   19

E   21

A1   Fahrzeuglängsachse

Figur 3

Figur 4

Figur 5

Figur 6

EP 3 737 605 B1

Figur 7

Figur 8

Figur 9

Figur 10

Figur 11

EP 3 737 605 B1

Figur 12

Figur 13

Figur 14

Figur 15

Figur 16

Figur 17

132

Figur 18

Figur 19

Figur 20

EP 3 737 605 B1

Figur 21

H

Figur 22

Figur 23

Figur 24

Figur 25

EP 3 737 605 B1

Figur 26

EP 3 737 605 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1917174 B1

- WO 2012069656 A1